# EUROPEAN PATENT SPECIFICATION

(11) **EP 3 417 414 B1**
(45) Date of publication and mention of the grant of the patent: **26.03.2025**
(21) Application number: 17820587.8
(22) Date of filing: 30.06.2017
(51) Int. Cl.: G06Q 20/32, G06Q 20/34, G06Q 20/40, G06Q 20/38, G06Q 30/06

(54) **SYSTEM AND METHOD FOR TRANSACTION BASED ON LICENSE PLATE NUMBER**
SYSTEM UND VERFAHREN FÜR EINE TRANSAKTION BASIEREND AUF DEM KRAFTFAHRZEUGKENNZEICHEN
SYSTÈME ET PROCÉDÉ DE TRANSACTION BASÉE SUR LE NUMÉRO DE PLAQUE D'IMMATRICULATION

(30) Priority: 01.07.2016 US 201662357496 P; 05.12.2016 KR 20160164390
(43) Date of publication of application: 26.12.2018
(73) Proprietor: Samsung Electronics Co., Ltd., Suwon-si, Gyeonggi-do 16677 (KR)
(72) Inventor: LEE, Dong-chang, Suwon-si Gyeonggi-do 16593 (KR); KIM, Myung-sik, Suwon-si Gyeonggi-do 16509 (KR); HAN, Seung-hoon, Seoul 06642 (KR); KANG, Seung-soo, Seoul 06762 (KR); MOON, Bo-seok, Gunpo-si Gyeonggi-do 15866 (KR); JUNG, Kwang-soo, Gwacheon-si Gyeonggi-do 13835 (KR); YU, Gang-youl, Suwon-si Gyeonggi-do 16512 (KR)
(74) Representative: Nederlandsch Octrooibureau
(86) International application number: PCT/KR2017/006989
(87) International publication number: WO 2018/004311

(56) References cited:
- WO-A1-2015/016929
- KR-A- 20150 129 336
- US-A1- 2002 143 623
- US-A1- 2009 289 109
- US-A1- 2010 057 624
- US-A1- 2013 204 719
- US-A1- 2013 281 017
- US-A1- 2016 171 477

## Description

### [Technical Field]

Systems and methods consistent with aspects of one or more exemplary embodiments relate to a transaction based on a license plate number, and more particularly, to a system and a method for performing a transaction based on a license plate number by using a user's terminal located in a vehicle.

### [Background Art]

With advancement in data processing technique and network technique, a user may pay for an item and a service by using various devices. In particular, a user who uses a vehicle may enter an offline store while driving the vehicle and is thus likely to pay for an item or a service provided in the offline store while riding in the vehicle. Thus, there is a growing need for a user who uses a vehicle to perform a transaction in an easy and safe manner by using a vehicle terminal and/or a mobile device. Patent document US 2009/0289109 A1, published on 26 November 2009, discloses an automobile being equipped with a reader to be placed inside of the automobile, the reader being able to read purchasing instrument data of at least one of a contactless credit card or smart card-type credit card or NFC-enabled handset, and the reader being further connected to a wireless communication interface of the automobile, the wireless communication interface being able to transmit the purchasing instrument data to a point of sale. Patent document US 2016/0171477 A1, published on 16 June 2016, discloses a method for facilitating automatic payment in a payment system requires less interaction by both the credit card user and store clerks than current payment systems. Patent document US 2010/0057624 A1, published on 4 March 2010, discloses systems and methods for processing electronic payments for retail services and goods delivered by a retail establishment. Patent document US 2013/0281017 A1, published on 24 October 2013, discloses how to leverage technology in a vehicle to provide various services in a convenient manner.

### [Disclosure]

### [Technical Solution]

According to an aspect of exemplary embodiments, a transaction system and a method capable of paying for an item on the basis of a license plate number are provided.

Exemplary embodiments provide a transaction system and a method capable of enabling a payment server to pay for an item provided in an offline store by using a license plate number provided to a mobile device via a vehicle terminal of a vehicle.

Exemplary embodiments provide a transaction system and a method capable of paying for an item without providing credit card information to a store terminal of an offline store.

### [Description of Drawings]

These and/or other aspects will become more apparent and more readily appreciated from the following description of exemplary embodiments, taken in conjunction with the accompanying drawings. Understanding that these drawings depict only exemplary embodiments and are not therefore to be considered to be limiting of the scope of the disclosure, the principles herein are described and explained with additional specificity and detail through the use of the accompanying drawings, in which:
FIG. 1 is a diagram schematically illustrating an item payment system using a license plate number according to an exemplary embodiment;
FIG. 2 is a diagram illustrating a mobile device requests a payment server to pay for an item by using a license plate number received from a vehicle terminal, according to an exemplary embodiment;
FIG. 3 is a flowchart illustrating a method of providing data to be used to pay for an item, performed by a vehicle terminal, according to an exemplary embodiment;
FIG. 4 is a flowchart illustrating a method of requesting a payment server to handle payment by using a license plate number, performed by a mobile device, according to an exemplary embodiment;
FIG. 5 is a flow diagram illustrating a method of paying for an item, performed in an item payment system, in which a vehicle terminal selects an item which a user desires to purchase and a mobile device requests to pay for the item by using a license plate number received from the vehicle terminal, according to an exemplary embodiment;
FIG. 6 is a flow diagram illustrating a method of paying for an item, performed in an item payment system, in which a mobile terminal selects an item which a user desires to purchase and requests to pay for the item by using a license plate number received from a vehicle terminal, according to an exemplary embodiment;
FIG. 7 is a flow diagram illustrating a method of paying for an item, performed in an item payment system, in which a first mobile device and a second mobile device request a payment server to pay for the item, according to an exemplary embodiment;
FIG. 8 is a diagram illustrating a vehicle terminal requests a payment server to pay for an item by using a license plate number, according to an exemplary embodiment;
FIG. 9 is a flow diagram illustrating a method of paying for an item by requesting a payment server to pay for the item, performed by a vehicle terminal, according to an exemplary embodiment;
FIG. 10 is a flow diagram illustrating a method of paying for an item by requesting a payment server to make divided payment of the item, performed by a vehicle terminal, according to an exemplary embodiment;
FIG. 11 is a diagram illustrating that an item is paid by requesting a payment server to pay for the item via a store server without using a vehicle terminal, performed by a mobile device, according to an exemplary embodiment;
FIG. 12 is a diagram illustrating that an item is paid by requesting a store terminal to pay for the item via a store server without using a vehicle terminal, performed by a mobile device, according to an exemplary embodiment;
FIG. 13 is a diagram illustrating a license plate number being registered by a vehicle terminal, according to an exemplary embodiment;
FIG. 14 is a flow diagram illustrating a method of registering a license plate number, performed by a vehicle terminal, according to an exemplary embodiment;
FIG. 15 is a diagram illustrating a location of a vehicle being checked by a vehicle terminal, according to an exemplary embodiment;
FIG. 16 is a diagram illustrating divided payment costs being entered into a vehicle terminal, according to an exemplary embodiment;
FIG. 17 is a diagram illustrating a location at which a short-distance communication module of a vehicle terminal is installed, according to an exemplary embodiment;
FIG. 18 is a diagram illustrating at least one communication module installed outside a vehicle, according to an exemplary embodiment;
FIGS. 19A and 19B are views illustrating a list of items being displayed by a vehicle terminal, according to an exemplary embodiment;
FIG. 20 is a flow diagram illustrating a method of authenticating payment of an item, performed by a payment server, according to an exemplary embodiment;
FIG. 21 is a block diagram illustrating a vehicle terminal according to an exemplary embodiment;
FIGS. 22 and 23 are block diagrams illustrating mobile devices according to exemplary embodiments; and
FIG. 24 is a block diagram illustrating a payment server according to an exemplary embodiment.

### [Best Mode]

Additional aspects of exemplary embodiment will be set forth in part in the description which follows and, in part, will be apparent from the description, or may be learned by practice of exemplary embodiments.

The invention is set out in the appended set of claims.

### [Mode for Invention]

Exemplary embodiments will be described in detail with reference to the accompanying drawings below so that one of ordinary skill in the art can easily implement the present disclosure. However, the present disclosure may be embodied in many different forms and is not limited thereto. For clarity, parts of exemplary embodiments which are not related to describing the exemplary embodiments are omitted in the drawings, and same reference numerals are allocated to the same or analogues elements through.

As used herein, it will be understood that when an element is referred to as being "connected to" another element, the element can be directly connected to another element or can be electrically connected to another element while having intervening elements therebetween. It will be further understood that when an element is referred to as "including" another element, the element should be understood to further include other elements unless mentioned otherwise.

As used herein, the term 'and/or' includes any and all combinations of one or more of the associated listed items. Expressions such as 'at least one of,' when preceding a list of elements, modify the entire list of elements and do not modify the individual elements of the list.

Exemplary embodiments will be described in detail with reference to the accompanying drawings.

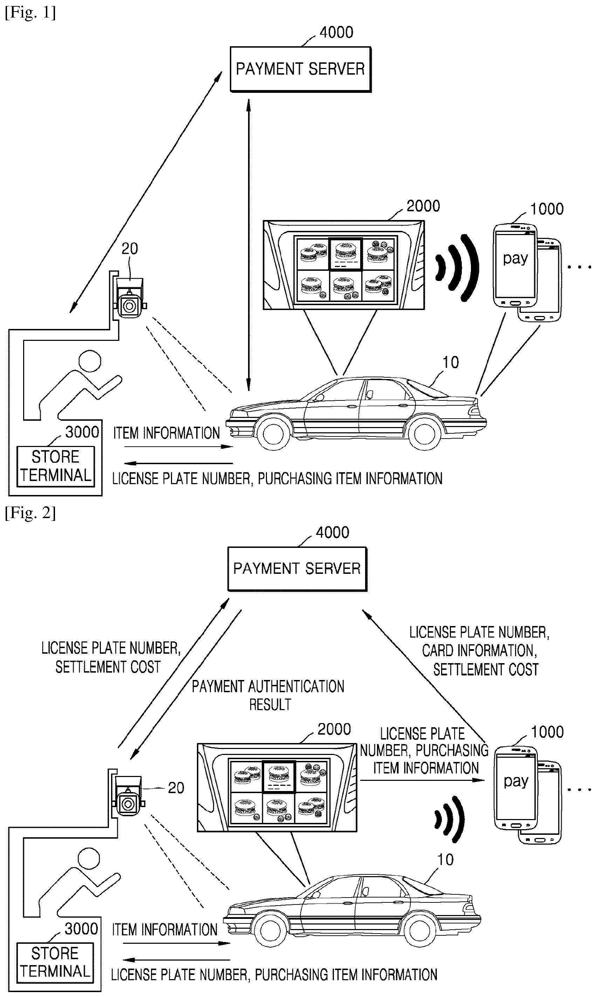

FIG. 1 is a diagram schematically illustrating an item payment system using a license plate number, according to an exemplary embodiment.

Referring to FIG. 1, the item payment system according to an exemplary embodiment may include at least one mobile device 1000, a vehicle 10, a vehicle terminal 2000, a store terminal 3000, and a payment server 4000.

The store terminal 3000 may be a terminal located in an offline store. A user who is in the vehicle 10 may request the payment server 4000 to pay for an item provided in the offline store by manipulating the vehicle terminal 2000 or the mobile device 1000.

A license plate number of the vehicle 10 may be registered in the vehicle terminal 2000. The vehicle terminal 2000 or the mobile device 1000 may transmit a payment request including the license plate number to the payment server 4000 so that the payment server 4000 may authenticate the payment of the item which the user desires to purchase on the basis of the license plate number. Furthermore, the vehicle terminal 2000 or the mobile device 1000 may provide the license plate number to the store terminal 3000, and the store terminal 3000 may transmit the license plate number to the payment server 4000 so as to request the payment server 4000 to provide a result of the payment of the item.

In this case, the vehicle terminal 2000 or the mobile device 1000 may provide the store terminal 3000 with the license plate number and purchasing item information regarding the item which the user desires to purchase but exemplary embodiments are not limited thereto. The store terminal 3000 may obtain a license plate number by photographing the license plate number of the vehicle 10 by using a camera 20 installed in the offline store. The store terminal 3000 may obtain the purchasing item information regarding the item which the user desires to purchase from a store clerk on the basis of a user input. The purchasing item information may include, for example, an identification (ID) value and a price (e.g., a settlement or total cost) of the item which the user desires to purchase but is not limited thereto.

The mobile device 1000 may be, but is not limited to, a smart phone, a tablet personal computer (PC), a cellular phone, a personal digital assistant (PDA), a laptop computer, a media player, a global positioning system (GPS) device, an e-book terminal, an MP3 player, a digital camera, or another mobile computing device. Otherwise, the mobile device 1000 may be a wearable device, such as a watch, glasses, a hairband, a ring, or the like, which has a communication function and a data processing function.

The vehicle terminal 2000 may be an electronic device installed in the vehicle 10, and provide various services to a user by controlling various devices included in the vehicle 10 and communicating with another electronic device or a server. Various inner devices of the vehicle terminal 2000 may be located at predetermined positions inside the vehicle 10.

The store terminal 3000 may be a point-of-sale (POS) terminal used to pay for an item in the offline store but is not limited thereto.

The payment server 4000 may be a server authenticating payment and be operated by at least one operator. The payment server 4000 may be one server operated by one operator but is not limited thereto. The payment server 4000 may include a plurality of servers operated by a plurality of operators. For example, the payment server 4000 may include a server which manages card information related to payment and handles the payment, and a server which authenticates the payment.

The mobile device 1000, the vehicle 10, the vehicle terminal 2000, the store terminal 3000, and the payment server 4000 illustrated in FIG. 1 may communicate with one another in at least one network. The at least one network should be understood to mean a comprehensive data communication network including a local area network (LAN), a wide area network (WAN), a value-added network (VAN), a mobile radio communication network, a satellite communication network, and a combination thereof, and enabling subjects of these networks as illustrated in FIG. 1 to smoothly communicate with one another. The at least one network may include a wire Internet, a wireless Internet, and a mobile wireless communication network. Examples of wireless communication may include, but are not limited to, Wi-Fi, Bluetooth, Bluetooth low energy, ZigBee, Wi-Fi direct (WFD), ultra-wide band (UWB), infrared data communication (IrDA), near-field communication (NFC), etc.

FIG. 2 is a diagram illustrating an example in which a mobile device 1000 requests a payment server 4000 to pay for an item by using a license plate number received from a vehicle terminal 2000, according to an exemplary embodiment.

Referring to FIG. 2, when a vehicle 10 enters an offline store, the vehicle terminal 2000 may display a list of items provided in the offline store, and request the payment server 4000 via the mobile device 1000 to pay for an item selected by a user from the list of items, thereby paying for the item.

The vehicle terminal 2000 may provide the mobile device 1000 with a license plate number and purchasing item information regarding an item which a user desires to purchase. The mobile device 1000 may select a card stored therein and request the payment server 4000 to pay for the item.

As the vehicle 10 enters the offline store, the store terminal 3000 may obtain the license plate number by photographing a license plate of the vehicle 10 by using a camera 20, and communicate with the vehicle terminal 2000 located in the vehicle 10 to receive the purchasing item information regarding the item which the user desires to purchase and the license plate number from the vehicle terminal 2000. The store terminal 3000 may compare the license plate number obtained by the camera 20 with the license plate number received from the vehicle terminal 2000, and request the payment server 4000 to provide a result of paying for the item.

Alternatively, the store terminal 3000 may obtain the license plate number by photographing the license plate number of the vehicle 10 by using the camera 20 installed at the offline store, and obtain from a store clerk the purchasing item information regarding the item which the user desires to purchase on the basis of a user input.

The payment server 4000 may authenticate the payment of the item in response to the payment request received from the mobile device 1000. Furthermore, the payment server 4000 may transmit a result of authenticating the payment to the store terminal 3000 providing the license plate number which is identical to the license plate number received from the mobile device 1000.

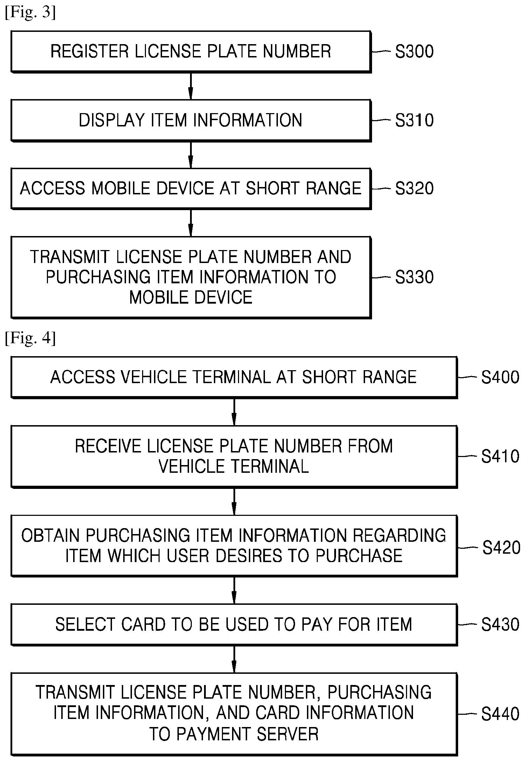

FIG. 3 is a flowchart illustrating a method of providing data to be used to pay for an item, performed by the vehicle terminal 2000, according to an exemplary embodiment.

Referring to FIG. 3, in operation S300, the vehicle terminal 2000 may register a license plate number of the vehicle 10 therein. The vehicle terminal 2000 may display a graphical user interface (GUI) on a screen thereof to register the license plate number, and register the license plate number input by a user therein through the GUI.

In operation S310, the vehicle terminal 2000 may display item information regarding items provided in an offline store. The vehicle terminal 2000 may receive the item information from the store terminal 3000 located in the offline store and display the item information on the screen thereof. Alternatively, the vehicle terminal 2000 may display the item information regarding the items provided in the offline store on the screen thereof by determining the location of the vehicle 10 and being connected to a web site of the offline store at the location. The item information may be information needed to purchase the items, and may include, for example, a list of the items, the prices of the items, discount information, coupon information, etc. but is not limited thereto. The vehicle terminal 2000 may display the list of the items on the screen thereof, and receive a user input for selecting a desired item.

In operation S320, the vehicle terminal 2000 may access the mobile device 1000 at short range, i.e., by using short range communication methods such as Bluetooth. As the mobile device 1000 approaches a range of communication of a short-distance communication module or short-distance communicator having circuitry for performing the communication, of the vehicle terminal 2000, communication may be established between the vehicle terminal 2000 and the mobile device 1000. The short-distance communication module of the vehicle terminal 2000 may be installed at a predetermined location in the vehicle 10, e.g., near a steering handle of the vehicle 10, but is not limited thereto.

In operation S330, the vehicle terminal 2000 may transmit the license plate number and purchasing item information to the mobile device 1000. The vehicle terminal 2000 may display received item information on the screen thereof and receive a user input for selecting a desired item. The vehicle terminal 2000 may transmit the license plate number registered therein and purchasing item information regarding an item which a user desires to purchase to the mobile device 1000 through short-distance communication. The purchasing item information may include, for example, the name of an item (or the names of items) which the user desires to purchase, images of the item(s), the price(s) of the item(s), discount information of the item(s), coupon information applicable to the item(s), etc., but is not limited thereto. The prices of the items may include, for example, the prices of the items and a total price of the items.

Thereafter, the mobile device 1000 may authenticate the user who will pay for the item and provide the payment server 4000 with the license plate number and the purchasing item information so as to request the payment server 4000 to pay for the item. For example, the mobile device 1000 may transmit the license plate number, a total cost for the purchase, and the coupon information to the payment server 4000.

FIG. 4 is a flowchart illustrating a method of requesting the payment server 4000 to handle payment by using a license plate number, performed by the mobile device 1000, according to an exemplary embodiment.

Referring to FIG. 4, in operation S400, the mobile device 1000 may access the vehicle terminal 2000 at short range. As the mobile device 1000 approaches a range of communication of a short-distance communication module of the vehicle terminal 2000, communication may be established between the vehicle terminal 2000 and the mobile device 1000.

In operation S410, the mobile device 1000 may receive a license plate number from the vehicle terminal 2000. The mobile device 1000 may receive the license plate number registered in the vehicle terminal 2000 from the vehicle terminal 2000 through short-distance communication.

In operation S420, the mobile device 1000 may obtain purchasing item information regarding an item or items which a user desires to purchase. When the vehicle terminal 2000 displays item information regarding items provided in an offline store on a screen thereof, the mobile device 1000 may receive the item information regarding the item which the user desires to purchase from the vehicle terminal 2000 through short-distance communication.

Alternatively, the mobile device 1000 may be connected to a server (not shown) of the offline store, receive the item information regarding the items provided in the offline store from the server, and select the item which the user desires to purchase on the basis of a user input. In this case, for example, the mobile device 1000 may be connected to a web site of the offline store on the basis of a location of the mobile device 1000, and may select the item which the user desires to purchase at the web site of the offline store.

In operation S430, the mobile device 1000 may select a card to be used to pay for the item. The mobile device 1000 may execute a payment application for paying for the item, and select one of credit cards registered therein by using the payment application.

Furthermore, the mobile device 1000 may authenticate the user who will use the selected credit card. For example, the mobile device 1000 may authenticate the user by using at least one among the user's bio-information, password, and authentication certificate but exemplary embodiments are not limited thereto.

In operation S440, the mobile device 1000 may transmit the license plate number, the purchasing item information, and card information to the payment server 4000. When the user who will use the selected credit card is authenticated, the mobile device 1000 may request the payment server 4000 to pay for the item while providing the payment server 4000 with the license plate number, the purchasing item information, and the card information. For example, the mobile device 1000 may request the payment server 4000 to pay for the item while providing the payment server 4000 with the license plate number, a total cost of the purchase, and the card information.

Although it is described above that the mobile device 1000 selects the credit card, exemplary embodiments are not limited thereto. For example, credit cards may be registered beforehand in the payment server 4000 based on or corresponding to individual mobile devices 1000. In this case, the mobile device 1000 may provide the payment server 4000 with an ID value of the mobile device 1000 or user ID instead of the card information, and the payment server 4000 may then select a credit card corresponding to the ID value of the mobile device 1000 or the user ID. The ID value may be a mobile identification number (MIN) or a mobile subscription identification number (MSIN), which are provided by way of an exemplary and not by way of a limitation.

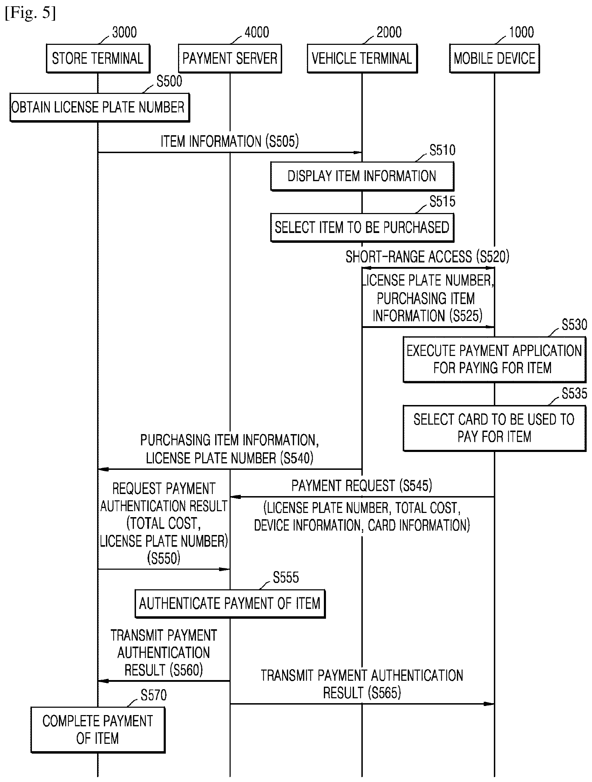

FIG. 5 is a flow diagram illustrating a method of paying for an item, performed in an item payment system, in which a vehicle terminal 2000 selects an item which a user desires to purchase and a mobile device 1000 requests to pay for the item by using a license plate number received from the vehicle terminal 2000, according to an exemplary embodiment.

Referring to FIG. 5, in operation S500, a store terminal 3000 may obtain a license plate number of the vehicle 10. When the vehicle 10 enters an offline store, the store terminal 3000 may obtain a license plate number by photographing a license plate of the vehicle 10 by using the camera 20. Alternatively, a clerk of the offline store may check the license plate number of the vehicle 10 and input the license plate number to the store terminal 3000. In this case, the store terminal 3000 may obtain the license plate number on the basis of a user input indicating the license plate number. Alternatively, the store terminal 3000 may receive the license plate number from the vehicle terminal 2000 or the mobile device 1000 located in the vehicle 10. In this case, the vehicle terminal 2000 or the mobile device 1000 located in the vehicle 10 may broadcast the license plate number of the vehicle 10.

In operation S505, the store terminal 3000 may provide the vehicle terminal 2000 with item information. As a communication module installed outside the vehicle 10 accesses a communication module of the store terminal 3000 at short range, the store terminal 3000 may transmit the item information to the vehicle terminal 2000. The item information is information regarding items provided in the offline store, and may include, for example, the names, prices, images, discount information, coupon information, etc. of the items but exemplary embodiment are not limited thereto.

In operation S510, the vehicle terminal 2000 may display the item information on a screen thereof. The vehicle terminal 2000 may execute an application for purchasing an item in the offline store when the vehicle 10 enters the offline store or when the item information is received from the store terminal 3000. Furthermore, the vehicle terminal 2000 may display the item information on the screen by using the application. For example, the vehicle terminal 2000 may display a GUI including a list of the items provided in the offline store.

In operation S515, the vehicle terminal 2000 may select one or more items to be purchased. The vehicle terminal 2000 may select an item which the user desires to purchase on the basis of a user input for selecting the item from the displayed list of the items. For example, the items may be selected using the selection keys of the vehicle terminal 2000 such as buttons, touch screen, dials, and so on.

In operation S520, the vehicle terminal 2000 may access the mobile device 1000 at short range. As the mobile device 1000 approaches a range of communication of a short-distance communication module of the vehicle terminal 2000, the vehicle terminal 2000 and the mobile device 1000 may be connected to each other through short-distance communication.

In operation S525, the vehicle terminal 2000 may transmit the license plate number and purchasing item information to the mobile device 1000. The vehicle terminal 2000 may transmit the license plate number registered therein and the purchasing item information regarding the item which the user desires to purchase to the mobile device 1000 through short-distance communication. Although it is described above that, in operation S525, the license plate number is provided from the vehicle terminal 2000 to the mobile device 1000 when the mobile device 1000 and the vehicle terminal 2000 access each other at short range, the providing of the license plate number to the mobile device 1000 is not limited thereto. For example, the mobile device 1000 may register beforehand therein the license plate number of the vehicle 10, as such only the purchasing item information is provided without the license plate number.

In operation S530, the mobile device 1000 may execute a payment application for paying for the item. As the mobile device 1000 accesses the vehicle terminal 2000 at short range, the mobile device 1000 may execute the payment application.

However, exemplary embodiments are not limited thereto, and the mobile device 1000 may access the vehicle terminal 2000 at short range after the mobile device 1000 executes the payment application. Alternatively, after the payment application is executed, the mobile device 1000 may receive the license plate number and the purchasing item information from the vehicle terminal 2000.

In operation S535, the mobile device 1000 may select a card to be used to pay for the item. The mobile device 1000 may display a list of credit cards registered therein, and determine a credit card to be used to pay for the item on the basis of a user input for selecting the credit card.

Furthermore, the mobile device 1000 may recommend a credit card to be used to pay for the item on the basis of discount information or coupon information related to the item. The mobile device 1000 may display a list of recommended credit cards, and determine a credit card to be used to pay for the item on the basis of a user input for selecting the credit card from the list of recommended credit cards.

In addition, the mobile device 1000 may authenticate a user who will use the selected credit card. The mobile device 1000 may receive, for example, the user's bio-information and/or password from the user, and authenticate the user on the basis of the bio-information and/or the password. Alternatively, the mobile device 1000 may authenticate the user on the basis of an authentication certificate. In this case, the mobile device 1000 may display a GUI for authenticating the user on a screen thereof.

In operation S540, the vehicle terminal 2000 may provide the license plate number and the purchasing item information to the store terminal 3000. As an item to be purchased is selected by the vehicle terminal 2000, the vehicle terminal 2000 may provide the store terminal 3000 with purchasing item information regarding the selected item and the license plate number registered in the vehicle terminal 2000. The vehicle terminal 2000 may provide the store terminal 3000 with the license plate number and the purchasing item information through a communication module installed outside the vehicle 10.

In operation S545, the mobile device 1000 may request a payment server 4000 to pay for the item. The mobile device 1000 may request the payment server 4000 to pay for the item by transmitting the license plate number, a total amount owed for the item or items i.e., total cost, card information, and device information regarding the mobile device 1000 to the payment server 4000. The device information may include, for example, an ID value of the mobile device 1000 and/or an ID value of a user of the mobile device 1000.

In operation S550, the store terminal 3000 may request the payment server 4000 to provide a payment authentication result. The store terminal 3000 may determine whether the license plate number obtained in operation S500 and the license plate number received in operation S540 are identical to each other. When the license plate number obtained in operation S500 and the license plate number received in operation S540 are identical to each other, the store terminal 3000 may request the payment server 4000 to provide the payment authentication result by transmitting the license plate number and the total cost to the payment server 4000.

Although it is described above that the store terminal 3000 requests the payment server 4000 to provide the payment authentication result by transmitting the total cost to the payment server 4000 on the basis of the purchasing item information received from the vehicle terminal 2000 in operation S540, exemplary embodiments are not limited thereto. For example, the store terminal 3000 may request the payment server 4000 to provide the payment authentication result without providing the total cost to the payment server 4000. In this case, the store terminal 3000 may request the payment server 4000 to provide the payment authentication result by providing the payment server 4000 with only the license plate number.

In operation S555, the payment server 4000 may authenticate payment of the item. The payment server 4000 may authenticate the payment of the item which the user desires to purchase on the basis of the card information and the total cost received from the mobile device 1000.

In this case, the payment server 4000 may search for the store terminal 3000 transmitting the same license plate number as the license plate number received from the mobile device 1000. Furthermore, the payment server 4000 may compare the total cost received from the store terminal 3000 transmitting the same license plate number as the license plate number received from the mobile device 1000 with a total cost received from the mobile device 1000. The payment server 4000 may authenticate the payment of the item when the total cost received from the store terminal 3000 transmitting the same license plate number as the license plate number received from the mobile device 1000 and the total cost received from the mobile device 1000 are identical to each other. Thus, the payment server 4000 may verify whether the item which the user of the mobile device 1000 desires to purchase will be rightly paid for.

In operation S560, the payment server 4000 may transmit the payment authentication result which is a result of authenticating the payment of the item to the store terminal 3000. The payment server 4000 may transmit vehicle information and the payment authentication result to the store terminal 3000. Alternatively, the payment server 4000 may transmit the vehicle information, the card information, and the payment authentication result to the store terminal 3000. Alternatively, the payment server 4000 may not transmit the card information to the store terminal 3000. In this case, the payment server 4000 may transmit the vehicle information and the payment authentication result to the store terminal 3000.

In operation S565, the payment server 4000 may transmit the payment authentication result of the item to the mobile device 1000. The payment server 4000 may transmit the vehicle information and the payment authentication result to the mobile device 1000. Alternatively, the payment server 4000 may transmit the card information and the payment authentication result to the mobile device 1000. Alternatively, the payment server 4000 may transmit the vehicle information, the card information, and the payment authentication result to the mobile device 1000. The payment server 4000 may not transmit the card information to the mobile device 1000. In this case, the vehicle information and the payment authentication result may be transmitted to the mobile device 1000.

In operation S570, the store terminal 3000 may complete the payment of the item on the basis of the payment authentication result, and display a message indicating the completion of the payment on a screen thereof. Furthermore, when the payment is completed, the user may receive the item from the offline store. In addition, the store terminal 3000 may check whether the payment of the item which the user desires to purchase is completed on the basis of the purchasing item information. In this case, the purchasing item information may be information received from the vehicle terminal 2000 or information generated by the store terminal 3000.

Although it is described above with reference to FIG. 5 that the mobile device 1000 selects the credit card and provides the card information regarding the selected credit card to the payment server 4000, exemplary embodiments are not limited thereto. The mobile device 1000 or a credit card corresponding to the user may be registered beforehand in the payment server 4000. In this case, the mobile device 1000 may provide the payment server 4000 with device ID value or user ID instead of the card information, which uniquely identifies the device or user, respectively. Furthermore, the payment server 4000 may select a credit card matching the device ID value or the user ID as a credit card for paying for the item. The mobile device 1000 may be connected to the payment server 4000 and register and manage a credit card to be used for payment based on a license plate number.

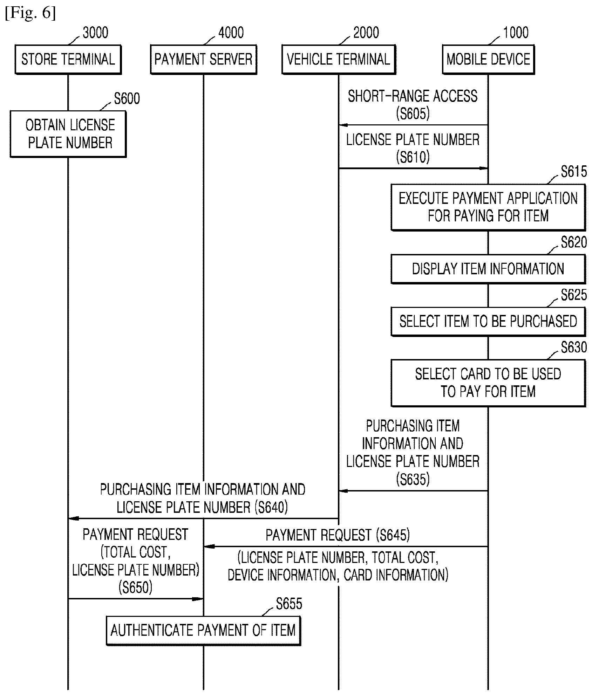

FIG. 6 is a flow diagram illustrating a method of paying for an item, performed in an item payment system, in which a mobile terminal 1000 selects an item which a user desires to purchase and requests to pay for the item by using a license plate number received from a vehicle terminal 2000, according to the invention.

In operation S600, a store terminal 3000 obtains a license plate number of the vehicle 10. In operation S605, a vehicle terminal 2000 and a mobile device 1000 access each other at short range. In operation S610, the vehicle terminal 2000 may transmit a license plate number to the mobile device 1000 through short-range wireless communication.

In operation S615, the mobile device 1000 may execute a payment application for paying for the item. The mobile device 1000 may execute the payment application as the vehicle terminal 2000 accesses the mobile device 1000 at short range.

In operation S620, mobile device 1000 may display item information. The mobile device 1000 may display the item information on a screen thereof as the vehicle terminal 2000 accesses the mobile device 1000 at short range.

The mobile device 1000 may be connected to a service server of an offline store and obtain item information regarding items provided in the offline store. The mobile device 1000 may display on a screen thereof the item information obtained from the service server of the offline store. For example, the mobile device 1000 may display a GUI including a list of the items provided in the offline store and the prices of the items on the screen thereof.

Furthermore, the mobile device 1000 may be connected to the service server of the offline store by identifying the offline store which the vehicle 10 enters on the basis of a location of the mobile device 1000. The identifying of the offline store may include identifying, for example, the name of the offline store, a district of the offline store, and/or an access address of the service server of the offline store.

For example, the mobile device 1000 may identify the offline store by identifying the location of the mobile device 1000 by using a global positioning system (GPS) signal. Alternatively, for example, the mobile device 1000 may identify the offline store by identifying the location of the mobile device 1000 on the basis of a signal received from an access point (AP) near the offline store. Alternatively, for example, the mobile device 1000 may identify the offline store on the basis of a signal broadcast from a communication module in the offline store. In this case, the broadcast signal may include, for example, the name of the offline store, the district of the offline store, and or the access address of the service server of the offline store.

In operation S625, the mobile device 1000 may select an item to be purchased. In operation S630, the mobile device 1000 may select a card to be used to pay for the item.

In operation S635, the mobile device 1000 provides the vehicle terminal 2000 with a license plate number and purchasing item information. The mobile device 1000 may transmit the license plate number and the purchasing item information to the vehicle terminal 2000 through short-distance communication.

Operations S640 to S655 correspond to operations S540 to S555 of FIG. 5 and thus a description thereof is omitted here.

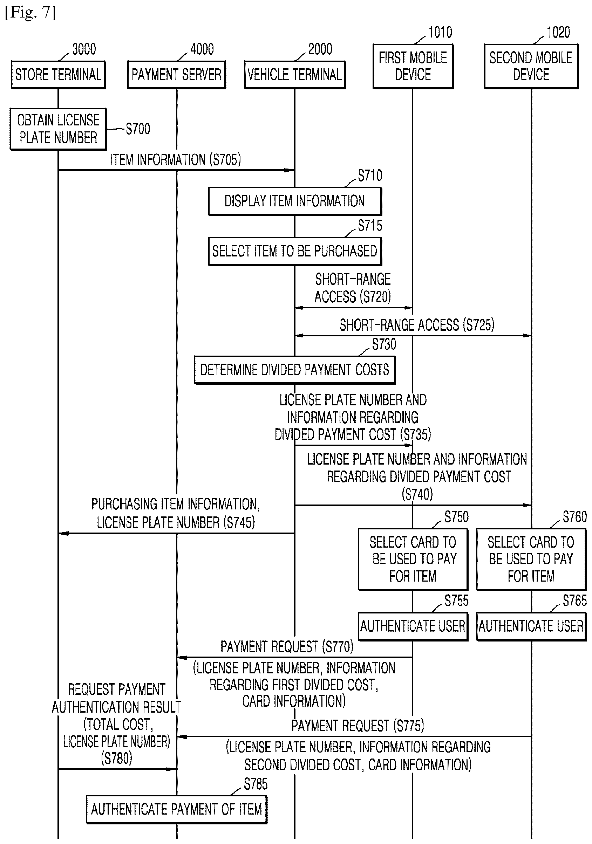

FIG. 7 is a flow diagram illustrating a method of paying for an item, performed in an item payment system, in which a first mobile device 1010 and a second mobile device 1020 request a payment server 4000 to pay for the item, according to an exemplary embodiment.

Operations S700 to S715 correspond to operations S500 to S515 of FIG. 5 and thus a description thereof is omitted here for convenience of explanation.

In operation S720, a vehicle terminal 2000 and the first mobile device 1010 may access each other at short range. The first mobile device 1010 may access the vehicle terminal 2000 at short range while an application for using a payment service according to an exemplary embodiment is executed.

In operation S725, the vehicle terminal 2000 and the second mobile device 1020 may access each other at short range. The second mobile device 1020 may access the vehicle terminal 2000 at short range while an application for using a payment service according to an exemplary embodiment is executed.

In operation S730, the vehicle terminal 2000 may determine divided payment costs. The vehicle terminal 2000 may display a GUI for inputting the divided payment costs on a screen thereof so that a total cost of the item may be divided and paid by the first mobile device 1010 and the second mobile device 1020. For example, a user may enter a cost to be paid by the first mobile device 1010 and a cost to be paid by the second mobile device 1020 through the GUI for inputting the divided payment costs. Alternatively, for example, the user may input a ratio or a percentage between the cost to be paid by the first mobile device 1010 and the cost to be paid by the second mobile device 1020 through the GUI for inputting a divided payment cost.

In operation S735, the vehicle terminal 2000 may transmit a license plate number and information regarding the divided payment cost to be paid by the first mobile device 1010 to the first mobile device 1010. The vehicle terminal 2000 may transmit the license plate number and the information regarding the divided payment cost to be paid by the first mobile device 1010 to the first mobile device 1010 through short-range wireless communication.

In operation S740, the vehicle terminal 2000 may transmit the license plate number and information regarding the divided payment cost to be paid by the second mobile device 1020 to the second mobile device 1020. The vehicle terminal 2000 may transmit the license plate number and the information regarding the divided payment cost to be paid by the second mobile device 1020 to the second mobile device 1020 through short-range wireless communication.

If a user of the first mobile device 1010 is an owner of the vehicle 10, the vehicle terminal 2000 may transmit the license plate number to the second mobile device 1020 only when an approval is received from the user of the first mobile device 1010. In this case, the first mobile device 1010 of the owner of the vehicle 10 may be registered as a main payment device beforehand in the vehicle terminal 2000. The vehicle terminal 2000 may display on a screen thereof a GUI for receiving an approval to the transmission of the license plate number to the second mobile device 1020. When the approval is input by the user of the first mobile device 1010 through the displayed GUI, the vehicle terminal 2000 may provide the second mobile device 1020 with the license plate number.

Alternatively, for example, the first mobile device 1010 may transmit approval information indicating the approval from the user of the first mobile device 1010 to the second mobile device 1020, and the second mobile device 1020 may receive the license plate number from the vehicle terminal 2000 by using the approval information of the user of the first mobile device 1010.

Although it is described above that the license plate number is provided from the vehicle terminal 2000 to the second mobile device 1020, the providing of the license plate number to the second mobile device 1020 is not limited thereto.

For example, the second mobile device 1020 may receive the license plate number of the vehicle 10 from the first mobile device 1010. For example, the first mobile device 1010 may transmit the license plate number stored therein to the second mobile device 1020 after the user of the first mobile device 1010 is authenticated.

Alternatively, for example, a user of the second mobile device 1020 may input the license plate number to the second mobile device 1020 by using authentication information (e.g., a password, fingerprints, an iris, etc.) of the user of the first mobile device 1010. In this case, a GUI for authenticating the user of the first mobile device 1010 may be displayed on a screen of the second mobile device 1020. Alternatively, when the authentication information of the user of the first mobile device 1010 is input via the displayed GUI, the second mobile device 1020 may receive the license plate number.

In operation S745, the vehicle terminal 2000 may transmit the license plate number and purchasing item information to a store terminal 3000. Furthermore, the vehicle terminal 2000 may transmit information regarding the divided payment cost to be paid by the first mobile device 1010 and the divided payment cost to be paid by the second mobile device 1020 to the store terminal 3000.

In operation S750, the first mobile device 1010 may select a card to be used to pay for the item. In operation S755, the first mobile device 1010 may authenticate the user to pay for the item. In operation S760, the second mobile device 1020 may select a card to be used to pay for the item. In operation S765, the second mobile device 1020 may authenticate the user to pay for the item. In an exemplary embodiment, the selection and authentication of the two terminals may occur at substantially same time.

In operation S770, the first mobile device 1010 may request the payment server 4000 to pay for the item. The first mobile device 1010 may request the payment server 4000 to pay for the item while transmitting the license plate number, the information regarding a first divided payment cost, and the card information to the payment server 4000. The first divided payment cost may be a part of the total cost of the item to be paid by the first mobile device 1010. The card information may be information regarding a credit card selected by the first mobile device 1010. The first mobile device 1010 may provide a coupon related to the payment of the item to the payment server 4000.

In operation S775, the second mobile device 1020 may request the payment server 4000 to pay for the item. The second mobile device 1020 may request the payment server 4000 to pay for the item while transmitting the license plate number, the information regarding second divided payment cost, and the card information to the payment server 4000. The second divided payment cost may be a part of the total cost of the item to be paid by the second mobile device 1020. The card information may be information regarding a credit card selected by the second mobile device 1020. Furthermore, the second mobile device 1020 may provide a coupon related to the payment of the item to the payment server 4000.

In operation S780, the store terminal 3000 may request the payment server 4000 to provide a payment authentication result. The store terminal 3000 may transmit the license plate number and information regarding the total cost of the purchase to the payment server 4000. The store terminal 3000 may transmit, for example, information regarding the total cost of the item to be paid, the cost of the item to be paid by the first mobile device 1010, and the cost of the item to be paid by the second mobile device 1020 to the payment server 4000. Alternatively, the store terminal 3000 may not provide the information regarding the total cost to the payment server 4000. In this case, the store terminal 3000 may request the payment server 4000 to provide the payment authentication result while transmitting only the license plate number to the payment server 4000.

In operation S785, the payment server 4000 may authenticate the payment of the item. The payment server 4000 may check the item to be paid and the divided payment costs of the item on the basis of the license plate number. The payment server 4000 may divide and pay the total cost of the item or items by using the credit card selected by the first mobile device 1010 and the credit card selected by the second mobile device 1020.

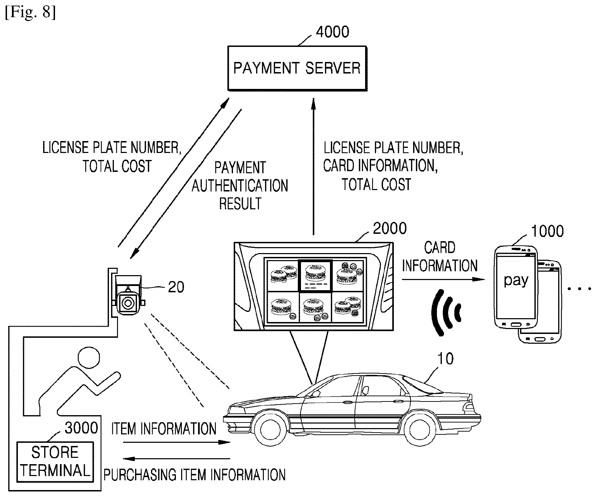

FIG. 8 is a diagram illustrating a vehicle terminal 2000 requesting a payment server 4000 to pay for an item by using a license plate number, according to an exemplary embodiment.

Referring to FIG. 8, the vehicle terminal 2000 may select an item to be purchased on the basis of a user input, and receive card information from a mobile device 1000 through short-range wireless communication. Furthermore, the vehicle terminal 2000 may request the payment server 4000 to pay for the item by using the card information.

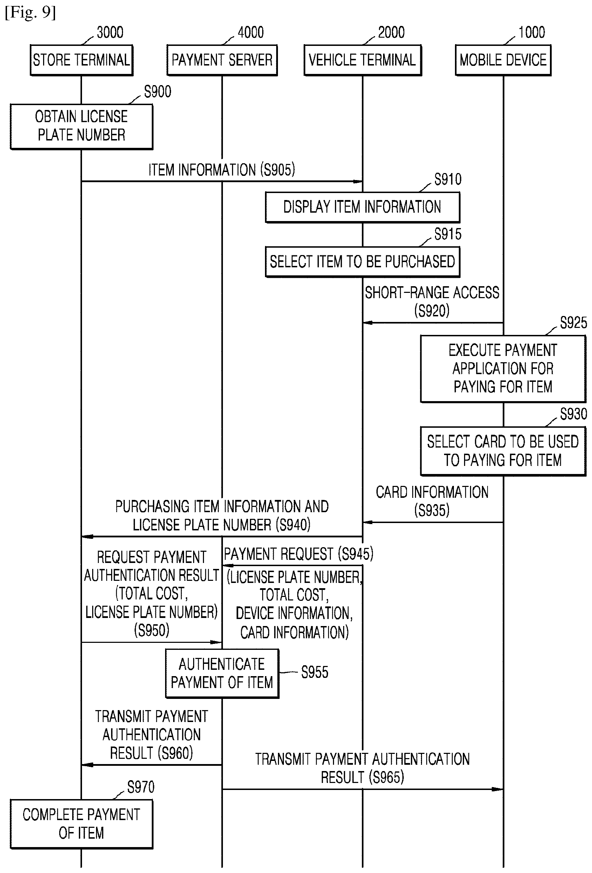

FIG. 9 is a flow diagram illustrating a method of paying for an item by requesting a payment server 4000 to pay for the item, performed by a vehicle terminal 2000, according to an exemplary embodiment.

Operations S900 to S920 correspond to operations S500 to S520 of FIG. 5 and thus a description thereof is omitted here for convenience of an explanation. Operations S925 and S930 correspond to operations S530 and S535 of FIG. 5 and thus a description thereof is omitted here for convenience of an explanation.

In operation S935, a mobile device 1000 may transmit card information to the vehicle terminal 2000. The mobile device 1000 may access the vehicle terminal 2000 at a short range, and transmit the card information to the vehicle terminal 2000 through short-range wireless communication.

In operation S940, the vehicle terminal 2000 may provide the license plate number and the purchasing item information to the store terminal 3000. As an item to be purchased is selected by the vehicle terminal 2000, the vehicle terminal 2000 may provide the store terminal 3000 with purchasing item information regarding the selected item and the license plate number registered in the vehicle terminal 2000. The vehicle terminal 2000 may provide the store terminal 3000 with the license plate number and the purchasing item information through a communication module installed outside the vehicle 10.

In operation S945, the vehicle terminal 2000 may request the payment server 4000 to pay for the item. The vehicle terminal 2000 may request the payment server 4000 to pay for the item by transmitting the license plate number, a total cost, the card information, and the device information regarding the mobile device 1000 to the payment server 4000.

Operations S950 to S970 are substantially the same as operations S550 to S570 of FIG. 5 and thus a description thereof is omitted here for convenience of explanation.

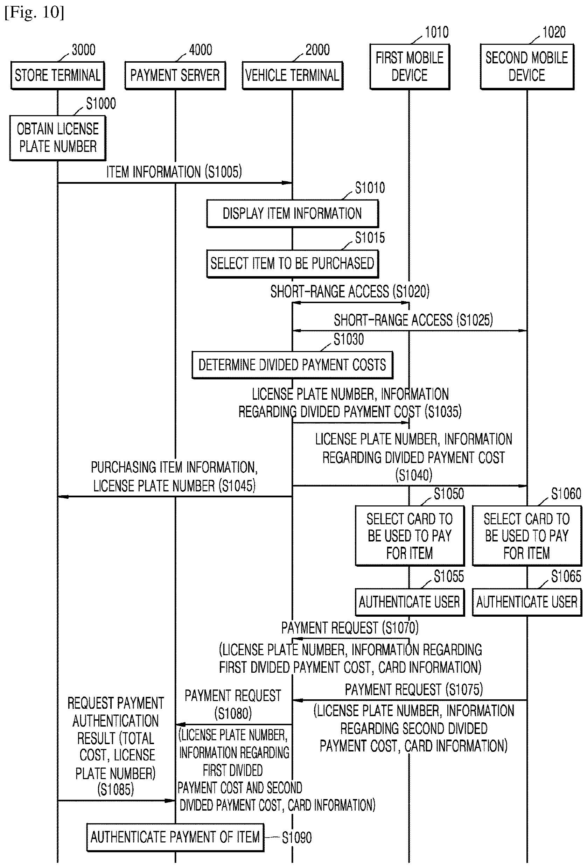

FIG. 10 is a flow diagram illustrating a method of paying for an item by requesting a payment server 4000 to make divided payment of the item, performed by a vehicle terminal 2000, according to an exemplary embodiment.

Operations S1000 to S1065 correspond to operations S700 to S765 of FIG. 7 and thus a description thereof is omitted here for convenience of explanation.

In operation S1070, a first mobile device 1010 may request the vehicle terminal 2000 to pay for an item. The first mobile device 1010 may request the vehicle terminal 2000 to pay for the item by transmitting a license plate number, information regarding a first divided payment cost, and card information to the vehicle terminal 2000. Furthermore, the first mobile device 1010 may provide a coupon related to the payment of the item to the vehicle terminal 2000.

In operation S1075, a second mobile device 1020 may request the vehicle terminal 2000 to pay for the item. The second mobile device 1020 may request the vehicle terminal 2000 to pay for the item while transmitting the license plate number, information regarding a second divided payment cost, and card information to the vehicle terminal 2000. Furthermore, the second mobile device 1020 may provide a coupon related to the payment of the item to the vehicle terminal 2000.

In operation S1080, the vehicle terminal 2000 may request the payment server 4000 to pay for the item. The vehicle terminal 2000 may request the payment server 4000 to pay for the item while transmitting the license plate number, the information regarding the first divided payment cost and the second divided payment cost, and the card information to the payment server 4000. The card information may include information regarding a credit card selected by the first mobile device 1010 and information regarding a credit card selected by the second mobile device 1020. Furthermore, the vehicle terminal 2000 may provide a coupon related to the payment of the item to the payment server 4000.

Operations S1085 and S1090 correspond to operations S780 and S785 of FIG. 7 and thus a description thereof is omitted here for convenience of explanation.

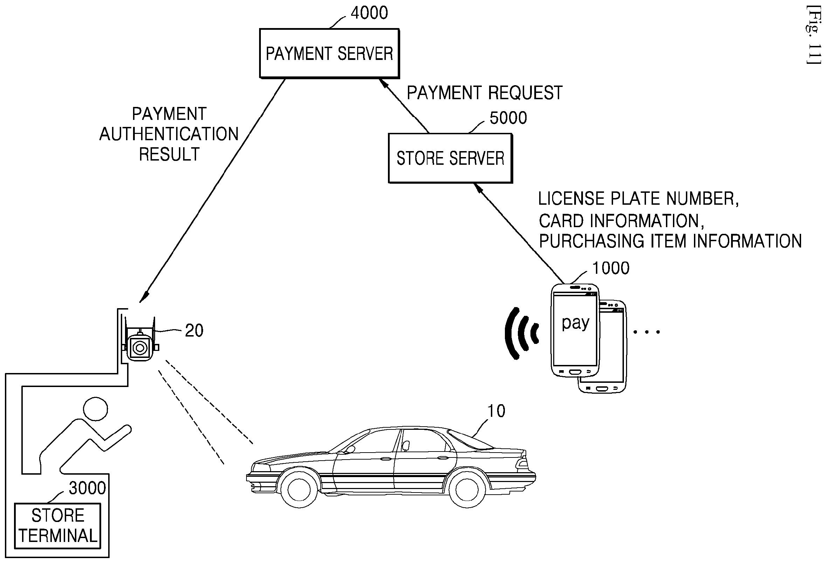

FIG. 11 is a diagram illustrating an exemplary embodiment in which an item is paid by requesting a payment server 4000 to pay for the item via a store server 5000 without using a vehicle terminal 2000, performed by a mobile device 1000, according to an exemplary embodiment.

Referring to FIG. 11, a user who gets or is in a vehicle 10 may pay for an item by using the mobile device 1000 without using the vehicle terminal 2000. The mobile device 1000 may check whether the mobile device 1000 enters an offline store and be then connected to a store server 5000 of the offline store. Furthermore, the mobile device 1000 may receive item information regarding items provided in the offline store from the store server 5000, and display a GUI for purchasing an item. Furthermore, the mobile device 1000 may select a desired item or items on the basis of a user input, and select a credit card for paying for the selected item.

Furthermore, the mobile device 1000 may request the store server 5000 to pay for the item by transmitting a license plate number, card information, and purchasing item information to the store server 5000. The store server 5000 may be a server operated in the offline store. Furthermore, the store server 5000 may be a server located in the offline store or may be a separate server managing the offline store. The mobile device 1000 may register beforehand the license plate number therein or receive the license plate number in real time through a user input. Alternatively, the mobile device 1000 may receive only the license plate number from the vehicle terminal 2000.

Thereafter, the store server 5000 may request the payment server 4000 to pay for the item, and the payment server 4000 may authenticate the payment of the item and transmit a payment authentication result to the store terminal 3000. The payment authentication result may include the license plate number, whether the payment of the item is authenticated or not, a list of items, and information regarding a settlement cost or total cost of the purchase.

Furthermore, the store terminal 3000 may complete the payment of the item by obtaining a license plate number by using a camera 20 and comparing the obtained license plate number with the payment authentication result. Furthermore, the store terminal 3000 may display the purchasing item information, a progress of the payment, and whether the payment is completed or not on a separate display device (not shown) connected thereto, so that a user may view the purchasing item information, the progress of the payment, and whether the payment is completed or not.

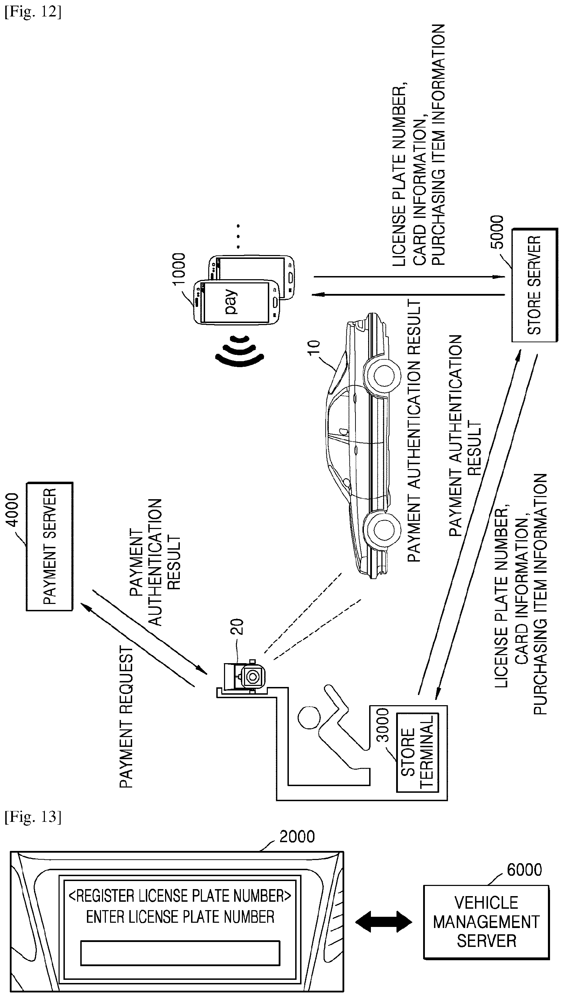

FIG. 12 is a diagram illustrating an exemplary embodiment in which an item is paid by requesting a store terminal 3000 to pay for the item via a store server 5000 without using a vehicle terminal 2000, performed by a mobile device 1000.

Referring to FIG. 12, a user who is in a vehicle 10 may pay for an item by using the mobile device 1000 without using the vehicle terminal 2000. The mobile device 1000 may check whether the vehicle 10 enters an offline store, be connected to the store server 5000 of the offline store, and receive item information regarding items provided in the offline store from the store server 5000. Furthermore, the mobile device 1000 may select an item to be purchased on the basis of a user input, and select a credit card for paying for the selected item. Furthermore, the mobile device 1000 may request the store server 5000 to pay for the selected item by transmitting a license plate number, card information, and purchasing item information to the store server 5000.

Then the store server 5000 may request the store terminal 3000 to pay for the item by transmitting the license plate number, the card information, and the purchasing item information to the store terminal 3000. The store terminal 3000 may obtain a license plate number through a camera 20 and compare the obtained license plate number with the license plate number received from the store server 5000. Furthermore, the store terminal 3000 may request the payment server 4000 to pay for the item by providing the payment server 4000 with the license plate number, the card information, and a total cost of the purchase on the basis of a result of the comparison. The payment server 4000 may authenticate the payment of the item and transmit a payment authentication result to the store terminal 3000. The store terminal 3000 may provide the mobile device 1000 with the payment authentication result via the store server 5000. Furthermore, the store terminal 3000 may display the purchasing item information, a progress of the payment, and whether the payment is completed or not on a separate display device (not shown) connected thereto, so that a user may view the purchasing item information, the progress of the payment, and whether the payment is completed or not.

FIG. 13 is a diagram illustrating a license plate number registration by a vehicle terminal 2000, according to an exemplary embodiment.

Referring to FIG. 13, the vehicle terminal 2000 may display a GUI for inputting a license plate number and receive the license plate number on the basis of a user input received through the GUI. Furthermore, the vehicle terminal 2000 may inquire of a vehicle management server 6000 about whether a correct license plate number is received. When the received license plate number is correct, the vehicle terminal 2000 may register it therein. The vehicle management server 6000 may be a server managing a license plate number of a vehicle 10. The vehicle management server 6000 may store a vehicle ID number (VIN) of the vehicle 10 and the license plate number such that they match each other.

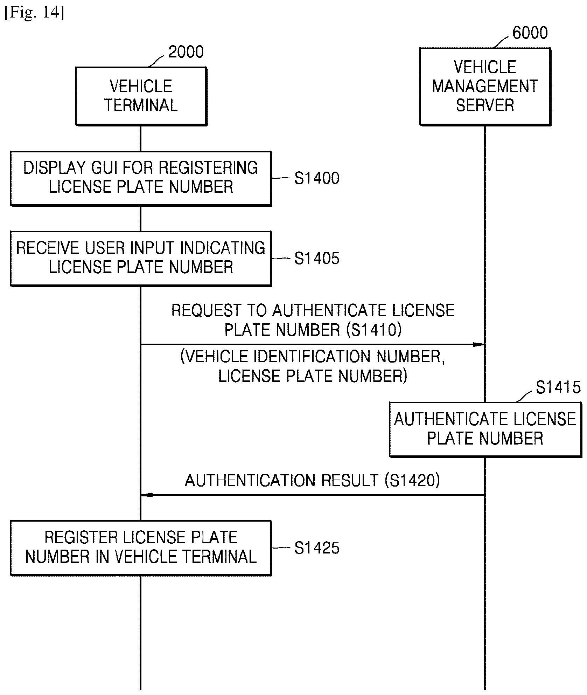

FIG. 14 is a flow diagram illustrating a method of registering a license plate number, performed by a vehicle terminal 2000, according to an exemplary embodiment.

In operation S1400, the vehicle terminal 2000 may display a GUI for registering a license plate number therein on a screen thereof. When a user executes a function of using a license plate number-based payment service in the vehicle terminal 2000, the vehicle terminal 2000 may display the GUI for registering the license plate number. Alternatively, when the user selects a button for registering the license plate number, the vehicle terminal 2000 may display the GUI for registering the license plate number.

In operation S1405, the vehicle terminal 2000 may receive a user input indicating a license plate number. The user may input the license plate number by using an alphabetical keyboard provided in the GUI.

In operation S1410, the vehicle terminal 2000 may request a vehicle management server 6000 to authenticate the license plate number. The vehicle terminal 2000 may request the vehicle management server 6000 to authenticate the license plate number by providing a vehicle ID number of the vehicle 10 and the license plate number to the vehicle management server 6000. In this case, the vehicle ID number of the vehicle 10 may be registered beforehand in the vehicle terminal 2000 by a manufacturer of the vehicle 10 during the manufacture of the vehicle 10.

In operation S1415, the vehicle management server 6000 may authenticate the license plate number received from the vehicle terminal 2000. The vehicle management server 6000 may store the vehicle ID number and the license plate number of the vehicle 10 such that they match each other during the registering of the vehicle 10. Furthermore, the vehicle management server 6000 may authenticate the license plate number received from the vehicle terminal 2000 by comparing the vehicle ID number and the license plate number received from the vehicle terminal 2000 with those stored in the vehicle management server 6000.

In operation S1420, the vehicle management server 6000 may transmit a result of authenticating the license plate number to the vehicle terminal 2000. In operation S1425, the vehicle terminal 2000 may register the received license plate number therein.

Although it is described above with reference to FIG. 14 that the vehicle terminal 2000 receives the license plate number on the basis of the user input, exemplary embodiments are not limited thereto. When a user executes a function of using a license plate number-based payment service in the vehicle terminal 2000 or selects a button for registering the license plate number, the vehicle terminal 2000 may receive the license plate number by requesting the vehicle management server 6000 to provide it. In this case, the vehicle terminal 2000 may request the vehicle management server 6000 to provide the license plate number by transmitting the vehicle ID number to the vehicle management server 6000. Furthermore, the vehicle terminal 2000 may display the license plate number received from the vehicle management server 6000 on a screen thereof to receive a confirmation as to whether the received license plate number is correct from a user.

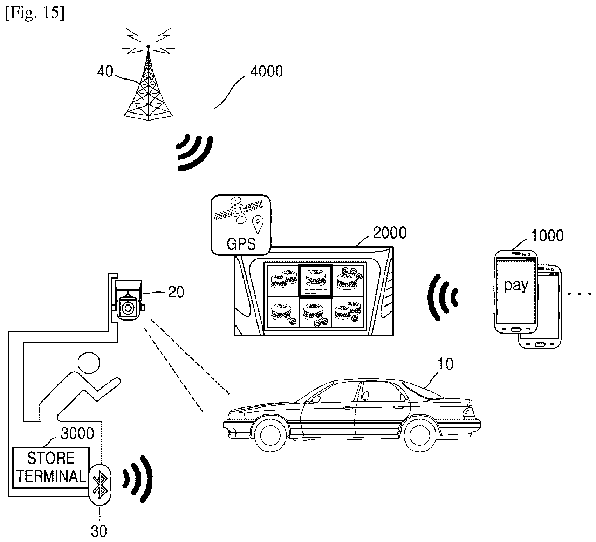

FIG. 15 is a diagram illustrating a location of a vehicle 10 being checked by a vehicle terminal 2000, according to an exemplary embodiment.

Referring to FIG. 15, for example, the vehicle terminal 2000 may determine a location of the vehicle 10 by using a GPS device located in the vehicle terminal 2000. Furthermore, the vehicle terminal 2000 may determine the location of the vehicle 10, for example, on the basis of a signal received from an access point (AP) 40 near the vehicle terminal 2000. Furthermore, the vehicle terminal 2000 may determine the location of the vehicle 10, for example, on the basis of a signal broadcast from a Bluetooth device 30 located in an offline store.

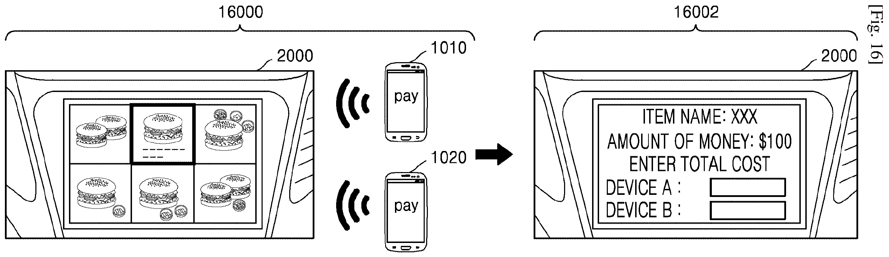

FIG. 16 is a diagram illustrating divided payment costs being entered into a vehicle terminal 2000, according to an exemplary embodiment.

Referring to reference number 16000 of FIG. 16, the vehicle terminal 2000 may display a list of items and receive a user input for selecting a desired item from the list of items. A first mobile device 1010 and a second mobile device 1020 access the vehicle terminal 2000 at short range and transmit device information thereof to the vehicle terminal 2000 through short-range wireless communication.

Referring to reference numeral 16002 of FIG. 16, the vehicle terminal 2000 may display on a screen thereof the name of an item or items selected, the price of each of the selected item, and a sentence requesting to enter a divided payment cost. For example, the vehicle terminal 2000 may display on the screen thereof phrases 'Enter the amount of money to be paid', 'Device A: ', and 'Device B: ', and receive information regarding the amount of money to be paid by the device A and the amount of money to be paid by the device B from a user.

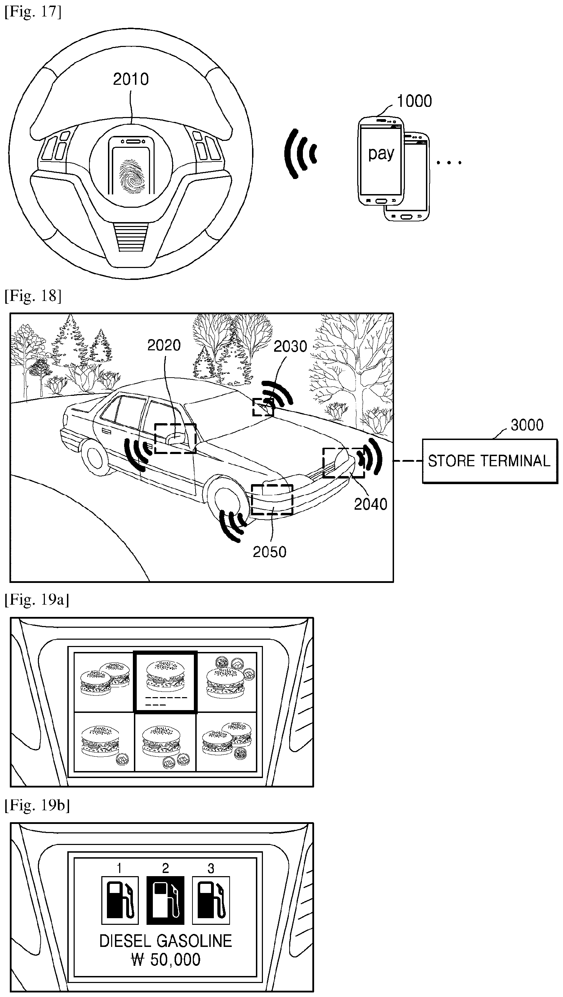

FIG. 17 is a diagram illustrating a location at a short-distance communication module 2010 of the vehicle terminal 2000, according to an exemplary embodiment.

Referring to FIG. 17, the short-distance communication module 2010 of the vehicle terminal 2000 may be installed near a steering wheel of the vehicle 10. For example, the short-distance communication module 2010 may be installed in a horn of the vehicle. When a mobile device 1000 is located near the horn of the vehicle 10, the mobile device 1000 may perform short-range wireless communication with the vehicle terminal 2000 through the short-distance communication module 2010. By way of an example, the short-distance communication module 201 may be Bluetooth circuitry.

FIG. 18 is a diagram illustrating at least one communication module, e.g., communication modules 2020, 2030, 2040, and 2050, installed outside the vehicle 10, according to an exemplary embodiment.

Referring to FIG. 18, the communication modules 2020, 2030, 2040, and 2050 may be installed outside the vehicle 10 to communicate with a store terminal 3000. For example, the communication modules 2020, 2030, 2040, and 2050 may be installed at a side mirror, a left bumper, and a right bumper of the vehicle 10. Furthermore, when a short-distance communication module (not shown) of the store terminal 3000 accesses at least one among the communication modules 2020, 2030, 2040, and 2050, the store terminal 3000 may exchange data with the vehicle terminal 2000 through short-range wireless communication.

FIGS. 19A and 19B are views illustrating a list of items being displayed by the vehicle terminal 2000, according to an exemplary embodiment.

Referring to FIG. 19A, as the vehicle 10 of FIG. 1 enters a hamburger store, the vehicle terminal 2000 may receive menu information from the store terminal 3000 of FIG. 1 located in the hamburger store and display a list of hamburgers on a screen of the vehicle terminal 2000.

Referring to FIG. 19B, as the vehicle 10 enters a gas station, the vehicle terminal 2000 may receive oil price information from the store terminal 3000 located in the gas station to put oil into the vehicle 10, and display a list of oil types on the screen of the vehicle terminal 2000.

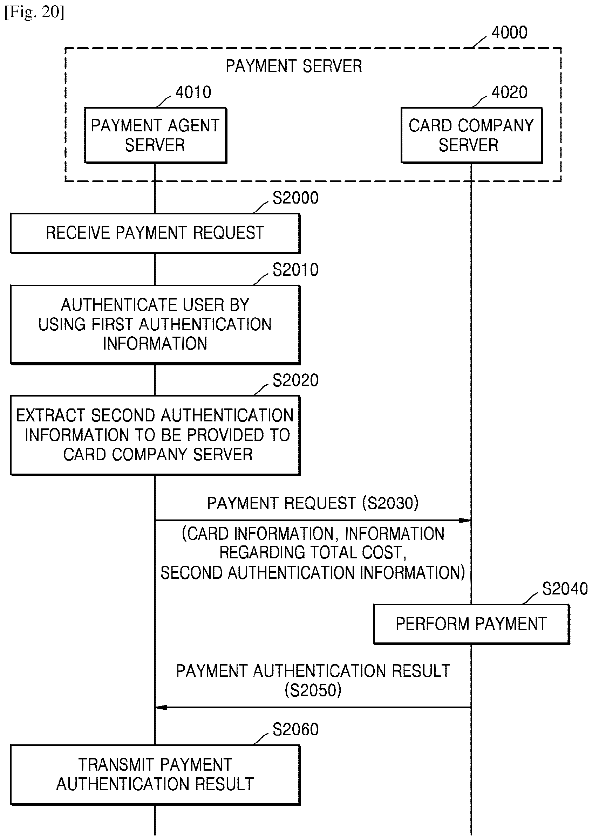

FIG. 20 is a flow diagram illustrating a method of authenticating payment of an item, performed by a payment server 4000, according to an exemplary embodiment.

Referring to FIG. 20, the payment server 4000 according to an exemplary embodiment may include a payment agent server 4010 and a card company server 4020. Furthermore, the payment agent server 4010 and the card company server 4020 may be embodied as one or more servers. Furthermore, the payment agent server 4010 and the card company server 4020 may be operated by the same business operator or different business operators.

In operation S2000, the payment agent server 4010 may receive a request to pay for an item. The payment agent server 4010 may receive a request to pay for an item which a user desires to purchase from at least one among the vehicle terminal 2000, the mobile device 1000, the store terminal 3000, and the store server 5000.

The request to pay for the item from at least one among the vehicle terminal 2000, the mobile device 1000, the store terminal 3000, and the store server 5000 may include information regarding a total cost for purchase, card information, and first authentication information. The first authentication information may be authentication information managed by the payment agent server 4010 to authenticate use of a card. Alternatively, for example, the request to pay for the item from at least one among the vehicle terminal 2000, the mobile device 1000, the store terminal 3000, and the store server 5000 may include the information regarding the total cost for purchase, a license plate number, and the first authentication information. Alternatively, for example, the request to pay for the item from at least one among the vehicle terminal 2000, the mobile device 1000, the store terminal 3000, and the store server 5000 may include i) the information regarding the total cost, ii) an ID value of the mobile device 1000 or user ID, and iii) the first authentication information.

Furthermore, the payment agent server 4010 may register and manage card information, first authentication information, and second authentication information of each of users. The second authentication information may be authentication information managed by the card company server 4020 to authenticate use of a card.

In operation S2010, the payment agent server 4010 may authenticate a user by using the first authentication information. When the payment agent server 4010 receives the card information and the first authentication information from at least one among the vehicle terminal 2000, the mobile device 1000, the store terminal 3000, and the store server 5000, the payment agent server 4010 may authenticate use of a card corresponding to the received card information by using the received first authentication information.

When receiving the license plate number and the first authentication information from at least one among the vehicle terminal 2000, the mobile device 1000, the store terminal 3000, and the store server 5000, the payment agent server 4010 may extract previously registered card information corresponding to the license plate number from database (DB) of the payment agent server 4010. Furthermore, the payment agent server 4010 may authenticate use of a card corresponding to the extracted card information by using the received first authentication information.

When receiving i) device ID value or user ID and ii) first authentication information from at least one among the vehicle terminal 2000, the mobile device 1000, the store terminal 3000, and the store server 5000, the payment agent server 4010 may extract previously registered card information corresponding to the ID value of the mobile device 1000 or the user ID from the DB of the payment agent server 4010. Furthermore, the payment agent server 4010 may authenticate use of a card corresponding to the extracted card information by using the received first authentication information.

In operation S2020, the payment agent server 4010 may extract second authentication information to be provided to the card company server 4020 from the DB thereof. The payment agent server 4010 may register and manage a license plate number, card information, first authentication information, and second authentication information of each of the users.

When receiving the card information from at least one among the vehicle terminal 2000, the mobile device 1000, the store terminal 3000, and the store server 5000, the payment agent server 4010 may extract previously registered second authentication information corresponding to a user from the DB thereof on the basis of the received card information.

When receiving the license plate number from at least one among the vehicle terminal 2000, the mobile device 1000, the store terminal 3000, and the store server 5000, the payment agent server 4010 may extract previously registered card information and second authentication information corresponding to a user from the DB thereof on the basis of the license plate number.

When receiving the ID value of the mobile device 1000 or the user ID from at least one among the vehicle terminal 2000, the mobile device 1000, the store terminal 3000, and the store server 5000, the payment agent server 4010 may extract previously registered card information and second authentication information corresponding to a user from the DB thereof on the basis of the ID value of the mobile device 1000 or the user ID.

In operation S2030, the payment agent server 4010 may request the card company server 4020 to pay for the item. The payment agent server 4010 may request the card company server 4020 to pay for the item by transmitting the information regarding the total cost of purchase, the card information, and the second authentication information to the card company server 4020.

In operation S2040, the card company server 4020 may pay for the item. The card company server 4020 may authenticate use of a card corresponding to the card information on the basis of the information regarding the total cost for the purchase, the card information, and the second authentication information which are received.

In operation S2050, the card company server 4020 may provide the payment agent server 4010 with a payment authentication result. In operation S2060, the payment agent server 4010 may transmit the payment authentication result.

Alternatively, the card company server 4020 may transmit the payment authentication result to the at least one among the vehicle terminal 2000, the mobile device 1000, the store terminal 3000, and the store server 5000 without going through the payment agent server 4010. In this case, the card company server 4020 may receive beforehand information for communicating with the vehicle terminal 2000, the mobile device 1000, the store terminal 3000, and the store server 5000 from the payment agent server 4010. For example, when receiving the request to pay for the item, the card company server 4020 may receive beforehand the information for communicating with the vehicle terminal 2000, the mobile device 1000, the store terminal 3000, and the store server 5000 from the payment agent server 4010.

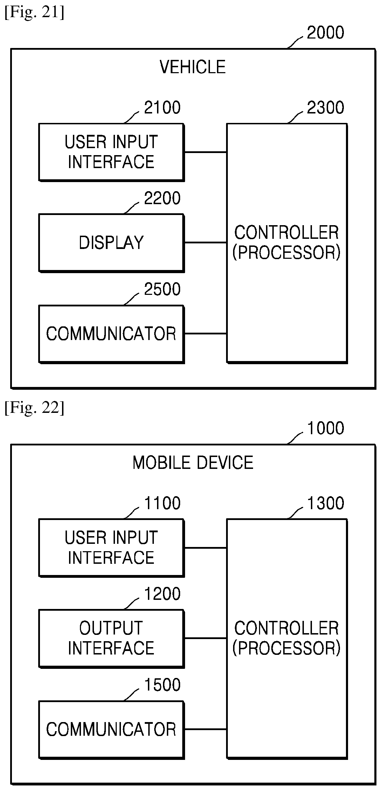

FIG. 21 is a block diagram of a vehicle terminal 2000 according to an exemplary embodiment.

As illustrated in FIG. 21, the vehicle terminal 2000 according to an exemplary embodiment may include a user input interface 2100, a display 2200, a controller (or a processor) 2300, and a communicator 2500. However, all the elements illustrated in FIG. 21 are not indispensable elements of the vehicle terminal 2000. The vehicle terminal 2000 may further include other elements in addition to the elements illustrated in FIG. 21 or may include only some of the elements illustrated in FIG. 21.

The user input interface 2100 should be understood as a means through which a user inputs data for controlling the vehicle terminal 2000. Examples of the user input interface 2100 may include, but are not limited to, a key pad, a touch pad (a contact type capacitive touch pad, a pressure type resistive overlay touch pad, an infrared sensor type touch pad, a surface acoustic wave conduction touch pad, an integration type tension measurement touch pad, a piezo effect type touch pad, or the like), a jog wheel, a jog switch, etc. A user input for performing card number-based payment may be received via the user input interface 2100.

The display 2200 displays and outputs information processed by the vehicle terminal 2000. For example, the display 2200 may display a GUI for performing card number-based payment.

When the display 2200 and a touch pad form a touch screen in a layered structure together, the display 2200 may be used as an input device as well as an output device. Furthermore, the vehicle terminal 2000 may include two or more displays 2200.

The communicator 2500 may include one or more elements for communicating the mobile device 1000, the store terminal 3000, the store server 5000, and the payment server 4000 with one another. For example, the communicator 2500 may include at least one short-distance communication component, a mobile communication component, a broadcast receiver, etc. The short-distance communication component may be installed inside the vehicle 10 to communicate with the mobile device 1000. In this case, the short-distance communication component may be installed near the steering wheel of the vehicle 10 but is not limited thereto.

Furthermore, a plurality of short-distance communication components may be installed outside the vehicle 10 to communicate with the store terminal 3000. In this case, the plurality of short-distance communication components may be installed, for example, at a side mirror, a left bumper, and a right bumper of the vehicle 10 but is not limited thereto. Furthermore, the plurality of short-distance communication components may be selectively activated by the controller 2300. An activated short-distance communication component may communicate with the store terminal 3000.

Generally, the controller 2300 controls overall operations of the vehicle terminal 2000. For example, the controller 2300 may execute programs stored in a memory included in the vehicle terminal 2000 to control overall operations of the user input interface 2100, the display 2200, the controller 2300, the communication unit 2500, etc. The controller 2300 may execute programs stored in a memory (not shown) to perform operations of the vehicle terminal 2000 described above with reference to FIGS. 1 to 19.

The controller 2300 may register a license plate number of the vehicle 10. The controller 2300 may control the display 2200 to display a GUI for registering the license plate number. The controller 2300 may register in the vehicle terminal 2000 the license plate number input by a user through the GUI.

The controller 2300 may control the display 2200 to display item information regarding items provided in an offline store. The controller 2300 may control the communicator 2500 to receive the item information from the store terminal 3000 of the offline store, and display the received item information on the display 2200 of the vehicle terminal 2000. Alternatively, the controller 2300 may determine a location of the vehicle 10 and be connected to a web site of the offline store at the determined location of the vehicle 10 so as to display the item information regarding the items provided in the offline store on the display 2200 of the vehicle terminal 2000. Furthermore, the vehicle terminal 2000 may display a list of the items on the display 2200 of the vehicle terminal 2000 and receive a user input for selecting a desired item.

The vehicle terminal 2000 may control the communicator 2500 to access the mobile device 1000 at short range. As the vehicle device 1000 approaches a range of communication of the short-distance communication component of the vehicle terminal 2000, communication may be established between the vehicle terminal 2000 and the mobile device 1000.

The controller 2300 may control the communicator 2500 to transmit the license plate number and purchasing item information to the mobile device 1000. The controller 2300 may transmit the license plate number registered in the vehicle terminal 2000 and purchasing item information regarding an item which a user desires to purchase to the mobile device 1000 through short-range wireless communication.

The controller 2300 may receive card information from the mobile device 1000 and transmit the license plate number, the purchasing item information, and the card information to the payment server 4000 so as to request the payment server 4000 to pay for the item.

Furthermore, the controller 2300 may determine divided payment costs. The controller 2300 may display a GUI for inputting the divided payment costs of the item on the display 2200 so that the total cost may be divided and paid by the first mobile device 1010 and the second mobile device 1020.

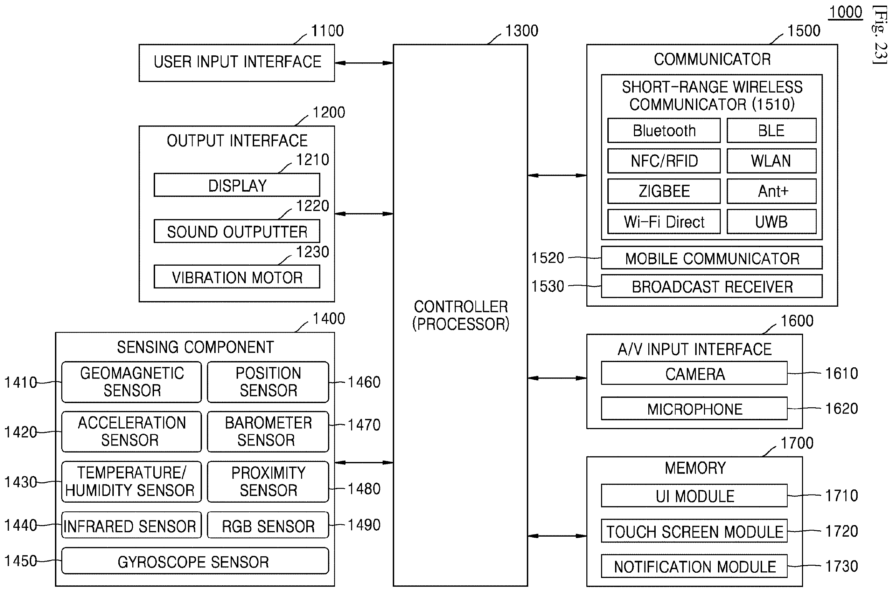

FIGS. 22 and 23 are block diagrams of mobile devices 1000 according to exemplary embodiments.

As illustrated in FIG. 22, the mobile device 1000 according to an exemplary embodiment may include a user input unit 1100, an output unit 1200, a controller 1300, and a communication unit 1500. However, all the elements illustrated in FIG. 22 are not indispensable elements of the mobile device 1000. The mobile device 1000 may further include elements other than the elements illustrated in FIG. 22 or may include only some of the elements illustrated in FIG. 22.

For example, as illustrated in FIG. 23, the mobile device 1000 according to another exemplary embodiment may include a user input interface 1100, an output interface 1200, a controller 1300, and a communicator 1500, and may further include a sensing component 1400, an audio/video (A/V) input interface 1600, and the memory 1700.

The user input interface 1100 provides an interface with the user through which a user inputs data for controlling the mobile device 1000. Examples of the user input interface 1100 may include, but are not limited to, a key pad, a dome switch, a touch pad (a contact type capacitive touch pad, a pressure type resistive overlay touch pad, an infrared sensor type touch pad, a surface acoustic wave conduction touch pad, an integration type tension measurement touch pad, a piezo effect type touch pad, or the like), a jog wheel, a jog switch, etc. A user input for paying for an item on the basis of a license plate number may be received via the user input interface 1100.

The output interface 1200 may output an audio signal, a video signal, or a vibration signal. The output interface 1200 may include a display 1210, a sound outputter 1220, and a vibration motor 1230.

The display 1210 displays and outputs information processed by the mobile device 1000. For example, the display 1210 may display a GUI for paying for the item on the basis of the license plate number.

When the display 1210 and a touch pad form a touch screen in a layered structure together, the display 1210 may be used as an input device as well as an output device.

The sound outputter 1220 outputs audio data received from the communicator 1500 or audio data stored in the memory 1700. The vibration motor 1230 may output a vibration signal.

Generally, the controller 1300 controls overall operations of the mobile device 1000. For example, the controller 1300 may control overall operations of the user input interface 1100, the display 1210, the communicator 1500, etc. by executing the programs stored in the memory 1700. The controller 1300 may perform the operations of the mobile device 1000 described above with reference to FIGS. 1 to 19 by executing the programs stored in the memory 1700.

In detail, the controller 1300 may access the vehicle terminal 2000 at short range by controlling the communicator 1500. Communication may be established between the vehicle terminal 2000 and the mobile device 1000 as the mobile device 1000 approaches a range of communication of the short-distance communication module of the vehicle terminal 2000.

The controller 1300 may control the communicator 1500 to receive a license plate number from the vehicle terminal 2000. The controller 1300 may receive a license plate number registered in the vehicle terminal 2000 from the vehicle terminal 2000 through short-range wireless communication.

The controller 1300 may obtain purchasing item information of an item which a user desires to purchase. When the vehicle terminal 2000 displays item information of items provided in an offline store on a screen thereof, the controller 1300 may control the communicator 1500 to receive the item information of the item which the user desires to purchase from the vehicle terminal 2000 through short-range wireless communication.

Alternatively, the controller 1300 may be connected to a server (not shown) of the offline store, receive the item information regarding the items provided in the offline store from the server, and select an item which a user desires to purchase on the basis of a user input. In this case, for example, the controller 1300 may be connected to a web site of the offline store on the basis of a location of the mobile device 1000, and select the item which the user desires to purchase at the web site of the offline store.

The controller 1300 may select a card to be used to pay for the item. The controller 1300 may execute a payment application to pay for the item, and select one of credit cards registered in the mobile device 1000 by using the executed payment application.

Furthermore, controller 1300 may authenticate the user who will use the selected credit card. For example, the controller 1300 may authenticate the user by using at least one among the user's bio-information, password, and authentication certificate but is not limited thereto.

The controller 1300 may control the communicator 1500 to transmit the license plate number, the purchasing item information, and card information to the payment server 4000. When the user who will use the selected credit card is authenticated, the controller 1300 may request the payment server 4000 to pay for the item by transmitting the license plate number, a settlement cost, and the card information to the payment server 4000.

Alternatively, the controller 1300 may control the communicator 1500 to transmit the card information to the vehicle terminal 2000, and the vehicle terminal 2000 may transmit the license plate number, the total cost, and the card information to the payment server 4000.

Although it is described above that the controller 1300 selects the credit card, exemplary embodiments are not limited thereto. For example, credit cards may be registered in the payment server 4000 in units of mobile devices 1000. In this case, the controller 1300 may provide the payment server 4000 with an ID value of the mobile device 1000 instead of the card information, and the payment server 4000 may select a credit card corresponding to the ID value of the mobile device 1000.

Furthermore, when the mobile device 1000 requests divided payment, the controller 1300 may receive information regarding divided payment costs from the vehicle terminal 2000 and authenticate a user who will pay the divided payment costs.

The sensing component 1400 may sense a state of the mobile device 1000 or a state of the vicinity of the mobile device 1000 and transmit sensed information to the controller 1300.

The sensing component 1400 may include at least one among a geomagnetic sensor 1410, an acceleration sensor 1420, a temperature/humidity sensor 1430, an infrared sensor 1440, a gyroscope sensor 1450, a position sensor (e.g., a GPS) 1460, a barometer sensor 1470, a proximity sensor 1480, and an RGB sensor (illuminance sensor) 1490 but is not limited thereto. Functions of the sensors may be intuitively reasoned from the names thereof by one of ordinary skill in the art and are thus not described in detail here.

The communicator 1500 may include one or more elements to establish communication with the vehicle terminal 2000, the store terminal 3000, the store server 5000, and the payment server 4000. For example, the communicator 1500 may include a short-range wireless communicator 1510, a mobile communicator 1520, and a broadcast receiver 1530.

Examples of the short-range wireless communicator 1510 may include, but are not limited to, a Bluetooth communication component, a Bluetooth low energy (BLE) communication component, a near-field communication component, a WLAN (Wi-Fi) communication component, a ZigBee communication component, an infrared data association (IrDA) communication component, a Wi-Fi Direct (WFD) communication component, a ultra-wideband (UWB) communication component, an Ant+ communication component, etc.

The mobile communicator 1520 transmits a radio signal to or receives a radio signal from at least one among a base station, an external terminal, and a server in a mobile communication network. Here, the radio signal may include various types of data according to the exchange of a voice call signal, a video call signal, or a text/multimedia message.

The broadcast receiver 1530 receives a broadcast signal and/or information related to a broadcast from the outside via a broadcast channel. The broadcast channel may include a satellite channel or a terrestrial channel. In one exemplary embodiment, the mobile device 1000 may not include the broadcast receiver 1530.

Furthermore, the communicator 1500 may exchange data for a transaction based on the license plate number with the vehicle terminal 2000, the store terminal 3000, the store server 5000, and the payment server 4000.

The memory 1700 may store programs needed to perform processing and control by the controller 1300, and data to be input to or output from the mobile device 1000.

The memory 1700 may include at least one among a flash memory type memory, a hard disk type memory, a multimedia card micro type memory, a card type memory (e.g., an SD or XD memory or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

The programs stored in the memory 1700 may be divided into a plurality of modules according to functions thereof. For example, the programs may be classified into a user interface (UI) module 1710, a touch screen module 1720, a notification module 1730, etc.

The UI module 1710 may provide a UI, a GUI, etc. which are specialized and linked to the mobile device 1000 in units of applications. The touch screen module 1720 may sense a user's touch gesture on a touch screen and provide information regarding the touch gesture to the controller 1300. In one exemplary embodiment, the touch screen module 1720 may recognize and analyze touch code. The touch screen module 1720 may be embodied as separate hardware including a controller.

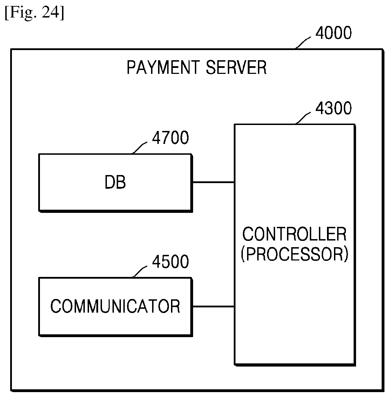

FIG. 24 is a block diagram of a payment server 4000 according to an exemplary embodiment.

Referring to FIG. 24, the payment server 4000 according to an exemplary embodiment may include a communicator 4500, a DB 4700, and a controller (processor) 4300.

The communicator 4500 may include one or more elements to establish communication among the mobile device 1000, the store terminal 3000, the store server 5000, and the vehicle terminal 2000.

The DB 4700 may store data for authenticating a transaction based on a license plate number.

Generally, the controller 4300 controls overall operations of the payment server 4000. For example, the controller 4300 may execute programs stored in the DB 4700 of the payment server 4000 to control overall operations of the DB 4700, the communicator 4500, etc. The controller 4300 may execute the programs stored in the DB 4700 to perform the operations of the payment server 4000 described above with reference to FIGS. 1 to 19.

The controller 4300 may receive a request to pay for an item from the mobile device 1000 through the communicator 4500. The controller 4300 may receive a license plate number, a list of items, information regarding a settlement cost, card information, and device information regarding the mobile device 1000.

The controller 4300 may receive a request to provide a payment authentication result from the store terminal 3000 through the communicator 4500.

The controller 4300 may authenticate the payment of the item using a credit card which a user selects on the basis of the card information and the information regarding the settlement cost received from the mobile device 1000.

The controller 4300 may search for the store terminal 3000 transmitting the same license plate number as that received from the mobile device 1000. Furthermore, the controller 4300 may compare information regarding a settlement cost received from the store terminal 3000 transmitting the same license plate number as that received from the mobile device 1000 with that regarding the total cost received from the mobile device 1000. The controller 4300 may authenticate the payment of the item when an item included in purchasing item information received from the store terminal 3000 transmitting the same license plate number as that received from the mobile device 1000 is the same as an item included in purchasing item information received from the mobile device 1000. Thus, the controller 4300 may authenticate whether an item which a user of the mobile device 1000 desires to purchase is to be rightly paid.

The controller 4300 may control the communicator 4500 to transmit the payment authentication result of the item to the store terminal 3000 and the mobile device 1000.

Furthermore, the controller 4300 may register beforehand information regarding a credit card corresponding to the mobile device 1000. In this case, the controller 4300 may select the credit card of the mobile device 1000 on the basis of the device information of the mobile device 1000, and authenticate the payment by using the selected credit card.

Although the payment of the item provided in the offline store has been described above, exemplary embodiments are not limited thereto. The above exemplary embodiments are also applicable to paying for a service provided in the offline store.

Some exemplary embodiments may be embodied as a computer-readable recording medium having recorded thereon commands such as program modules which can be executed by a computer. The computer-readable recording medium may be any medium accessible by a computer, and include a volatile/nonvolatile medium and a separable/non-separable medium. Furthermore, the computer-readable recording medium may include a computer storage medium and a communication medium. The computer-readable recording medium may include a volatile/nonvolatile medium and a separable/non-separable medium realized according to any method or technology to store information such as computer-readable commands, data structures, program modules, or other data. In general, the communication medium includes a computer-readable command, a data structure, a program module, data of a modulated data signal, or a transmission mechanism, and may include any information transfer medium.

In the detailed description, the term "unit" or "module" should be understood to mean a hardware component such as a processor or a circuit and/or a software component executed by a hardware component such as a processor.

Exemplary embodiments described above merely provides examples and it will be understood by those of ordinary skill in the art that the present disclosure may be embodied in many different forms without departing from the scope of the present disclosure. Thus, the exemplary embodiments set forth herein should be considered in descriptive sense only and not for purposes of limitation. For example, elements described as being included in a single unit or component may be dispersed and elements described as being dispersed may be combined with one another.

Therefore, the scope of the present disclosure is defined not by the detailed description of exemplary embodiment but by the appended claims and their equivalents, and all differences within the scope will be construed as being included in the present disclosure.

## Claims

1. A system comprising a mobile device (1000), a store terminal (3000) and a payment server (4000),
wherein the mobile device (1000) comprises:
a memory storing executable instructions;
at least one communication interface configured to transmit data to or receive data from a vehicle terminal (2000) and the payment server (4000); and
a processor configured to provide the data for paying by executing the instructions,
wherein the instructions comprise:
receiving a license plate number from the vehicle terminal (2000);
obtaining, based on a user input, purchasing item information for an item and credit card information to pay for the item;
providing, to the vehicle terminal (2000), the received license plate number and the purchasing item information for the item; and
transmitting the received license plate number, a total cost of the item, device information regarding the mobile device (1000) and the credit card information to the payment server (4000),
wherein the store terminal (3000) is configured to:
receive the license plate number and the purchasing item information from the vehicle terminal (2000), and
transmit, to the payment server (4000), a request for a payment authentication result comprising the license plate number and a total cost of the item based on the purchasing item information; and
wherein the payment server (4000) is configured to:
authenticate payment of the item based on a comparison of the total costs received from the mobile device (1000) and the store terminal (3000), respectively, the store terminal (3000) having transmitted the same license plate number as the license plate number received from the mobile device (1000).

2. The system of claim 1, wherein the instructions further comprise:
receiving item information regarding a plurality of items from a service server of an offline store;
controlling a display to display the received item information; and
receiving the user input for selecting the purchasing item information from among the displayed item information.

3. The system of claim 1, wherein the instructions further comprise:
receiving address information of a store server which is broadcast from the store terminal (3000); and
connecting to the store server based on the received address information.

4. The system of claim 1, wherein the instructions further comprise controlling a display to display a list of credit cards registered in the mobile device (1000).

5. The system of claim 1, wherein the instructions further comprise recommending a credit card for paying for the item from among a plurality of credit cards registered in the mobile device (1000).

6. The system of claim 1, wherein the instructions further comprise:
receiving a user input comprising authentication information to authenticate use of the selected credit card; and
authenticating the use of the selected credit card based on the authentication information,
wherein, in response to the authenticating the use of the selected credit card, transmitting the received license plate number and the information regarding the selected credit card to the payment server (4000).

7. The system of claim 1, wherein the instructions further comprise activating a payment application for paying for the item in response to the vehicle terminal (2000) being connected to the mobile device (1000) through short-range wireless communication.

8. A method of providing data for paying for an item, performed by a mobile device (1000), a store terminal (3000) and a payment server (4000), the method comprising:
receiving (S610), by the mobile device (1000), a license plate number from a vehicle terminal (2000);
obtaining, based on a user input, by the mobile device (1000), purchasing item information for the item and credit card information to pay for the item;
providing (S635), by the mobile device (1000), to the vehicle terminal (2000) the received license plate number and the purchasing item information for the item;
transmitting (S645), by the mobile device (1000), the license plate number, a total cost of the item, device information regarding the mobile device (1000) and the credit card information to the payment server (4000);
receiving (S640), by the store terminal (3000), the license plate number and the purchasing item information from the vehicle terminal (2000);
transmitting (S650), by the store terminal (3000), to the payment server (4000), a request for a payment authentication result comprising the license plate number and a total cost of the item based on the purchasing item information; and
authenticating (S655), by the payment server (4000), payment of the item based on a comparison of the total costs received from the mobile device (1000) and the store terminal (3000), respectively, the store terminal (3000) having transmitted the same license plate number as the license plate number received from the mobile device (1000).

9. The method of claim 8 further comprising:
receiving, by the mobile device (1000), item information regarding a plurality of items from a service server of an offline store;
displaying, by the mobile device (1000), the received item information; and
receiving, by the mobile device (1000), the user input for selecting the purchasing item information from among the displayed item information.

10. The method of claim 8, wherein the store terminal (3000) is physically located in a store and wherein the method further comprises capturing the license plate of the vehicle terminal (2000) positioned in front of the store terminal (3000) via a camera.

11. Computer-readable recording media having recorded thereon a program for executing the method of claim 8.

## Patentansprüche

1. System, das eine mobile Vorrichtung (1000), ein Store-Terminal (3000) und einen Zahlungsserver (4000) umfasst,
wobei die mobile Vorrichtung (1000) Folgendes umfasst:
einen Speicher, der ausführbare Anweisungen speichert;
mindestens eine Kommunikationsschnittstelle, die so konfiguriert ist, dass sie Daten an ein Fahrzeugendgerät (2000) und den Zahlungsserver (4000) überträgt oder von diesen empfängt; und
einen Prozessor, der so konfiguriert ist, dass er die Daten für die Zahlung durch Ausführen der Anweisungen bereitstellt,
wobei die Anweisungen Folgendes umfassen:
Erhalten eines Kraftfahrzeugkennzeichens von dem Fahrzeugendgerät (2000);
Erhalten von Einkaufsartikelinformationen für einen Artikel und Kreditkarteninformationen zur Bezahlung des Artikels basierend auf einer Benutzereingabe;
Bereitstellen des empfangenen Kraftfahrzeugkennzeichens und der Einkaufsartikelinformationen für den Artikel an das Fahrzeugendgerät (2000); und
Übertragen des empfangenen Kraftfahrzeugkennzeichens, der Gesamtkosten des Artikels, der Vorrichtungsinformationen bezüglich der mobilen Vorrichtung (1000) und der Kreditkarteninformationen an den Zahlungsserver (4000),
wobei das Store-Terminal (3000) zu Folgendem konfiguriert ist:
Empfangen des Kraftfahrzeugkennzeichens und der Einkaufsartikelinformationen von dem Fahrzeugendgerät (2000), und
Übertragen einer Anforderung für ein Zahlungsauthentifizierungsergebnis, das das Kraftfahrzeugkennzeichen und die Gesamtkosten des Artikels umfasst, basierend auf den Einkaufsartikelinformationen an den Zahlungsserver (4000); und
wobei der Zahlungsserver (4000) zu Folgendem konfiguriert ist:
Authentifizieren der Zahlung des Artikels basierend auf einem Vergleich der Gesamtkosten, die von der mobilen Vorrichtung (1000) bzw. dem Store-Terminal (3000) empfangen wurden, wobei das Store-Terminal (3000) das gleiche Kraftfahrzeugkennzeichen wie das von der mobilen Vorrichtung (1000) empfangene Kraftfahrzeugkennzeichen übertragen hat.

2. System nach Anspruch 1, wobei die Anweisungen ferner Folgendes umfassen:
Empfangen von Artikelinformationen bezüglich einer Vielzahl von Artikeln von einem Serviceserver eines Offline-Stores;
Steuern eines Displays zum Anzeigen der empfangenen Artikelinformationen; und
Empfangen der Benutzereingabe zum Auswählen der Einkaufsartikelinformationen aus den angezeigten Artikelinformationen.

3. System nach Anspruch 1, wobei die Anweisungen ferner Folgendes umfassen:
Empfangen von Adressinformationen eines Store-Servers, die von dem Store-Terminal (3000) gesendet werden; und
Verbinden mit dem Store-Server basierend auf den empfangenen Adressinformationen.

4. System nach Anspruch 1, wobei die Anweisungen ferner das Steuern eines Displays zum Anzeigen einer Liste von Kreditkarten umfasst, die in der mobilen Vorrichtung (1000) registriert sind.

5. System nach Anspruch 1, wobei die Anweisungen ferner das Empfehlen einer Kreditkarte zum Bezahlen des Artikels aus einer Vielzahl von Kreditkarten umfassen, die in der mobilen Vorrichtung (1000) registriert sind.

6. System nach Anspruch 1, wobei die Anweisungen ferner Folgendes umfassen:
Empfangen einer Benutzereingabe, die Authentifizierungsinformationen zum Authentifizieren der Verwendung der ausgewählten Kreditkarte umfasst; und
Authentifizieren der Verwendung der ausgewählten Kreditkarte basierend auf den Authentifizierungsinformationen,
wobei als Reaktion auf die Authentifizierung der Verwendung der ausgewählten Kreditkarte das empfangene Kraftfahrzeugkennzeichen und die Informationen bezüglich der ausgewählten Kreditkarte an den Zahlungsserver (4000) übertragen werden.

7. System nach Anspruch 1, wobei die Anweisungen ferner das Aktivieren einer Zahlungsanwendung zum Bezahlen des Artikels als Reaktion darauf umfassen, dass das Fahrzeugendgerät (2000) mit der mobilen Vorrichtung (1000) über eine drahtlose Nahbereichskommunikation verbunden ist.

8. Verfahren zum Bereitstellen von Daten zum Bezahlen eines Artikels, das von einer mobilen Vorrichtung (1000), einem Store-Terminal (3000) und einem Zahlungsserver (4000) ausgeführt wird, wobei das Verfahren Folgendes umfasst:
Empfangen (S610) eines Kraftfahrzeugkennzeichens von einem Fahrzeugendgerät (2000) durch die mobile Vorrichtung (1000);
Erhalten von Einkaufsartikelinformationen für den Artikel und Kreditkarteninformationen zum Bezahlen des Artikels durch die mobile Vorrichtung (1000) basierend auf einer Benutzereingabe;
Bereitstellen (S635) des empfangenen Kraftfahrzeugkennzeichens und der Einkaufsartikelinformationen für den Artikel durch die mobile Vorrichtung (1000) an das Fahrzeugendgerät (2000);
Übertragen (S645) des Kraftfahrzeugkennzeichens, der Gesamtkosten des Artikels, der Vorrichtungsinformationen bezüglich der mobilen Vorrichtung (1000) und der Kreditkarteninformationen durch die mobile Vorrichtung (1000) an den Zahlungsserver (4000);
Empfangen (S640) des Kraftfahrzeugkennzeichens und der Einkaufsartikelinformationen durch das Store-Terminal (3000) von dem Fahrzeugendgerät (2000);
Übertragen (S650) einer Anforderung für ein Zahlungsauthentifizierungsergebnis, das das Kraftfahrzeugkennzeichen und die Gesamtkosten des Artikels umfasst, basierend auf den Einkaufsartikelinformationen durch das Store-Terminal (3000) an den Zahlungsserver (4000); und
Authentifizieren (S655) der Bezahlung des Artikels durch den Zahlungsserver (4000) basierend auf einem Vergleich der Gesamtkosten, die von der mobilen Vorrichtung (1000) bzw. dem Store-Terminal (3000) empfangen wurden, wobei das Store-Terminal (3000) das gleiche Kraftfahrzeugkennzeichen wie das von der mobilen Vorrichtung (1000) empfangene Kraftfahrzeugkennzeichen übermittelt hat.

9. Verfahren nach Anspruch 8, das ferner Folgendes umfasst:
Empfangen von Artikelinformationen bezüglich einer Vielzahl von Artikeln über die mobile Vorrichtung (1000) von einem Serviceserver eines Offline-Stores;
Anzeigen der empfangenen Artikelinformationen durch die mobile Vorrichtung (1000); und
Empfangen der Benutzereingabe zum Auswählen der Einkaufsartikelinformationen aus den angezeigten Artikelinformationen durch die mobile Vorrichtung (1000).

10. Verfahren nach Anspruch 8, wobei sich das Store-Terminal (3000) physisch in einem Geschäft befindet und wobei das Verfahren ferner das Erfassen des Kraftfahrzeugkennzeichens des vor dem Store-Terminal (3000) positionierten Fahrzeugendgeräts (3000) über eine Kamera umfasst.

11. Computerlesbares Aufzeichnungsmedium, auf dem ein Programm zum Ausführen des Verfahrens nach Anspruch 8 aufgezeichnet ist.

## Revendications

1. Système comprenant un dispositif mobile (1000), un terminal de magasin (3000) et un serveur de paiement (4000),
où le dispositif mobile (1000) comprend :
une mémoire stockant des instructions exécutables ;
au moins une interface de communication configurée pour transmettre des données à ou recevoir des données d'un terminal de véhicule (2000) et du serveur de paiement (4000) ; et
un processeur configuré pour fournir les données pour payer en exécutant les instructions,
où les instructions comprennent :
recevoir un numéro de plaque d'immatriculation du terminal de véhicule (2000) ;
obtenir, sur la base d'une entrée utilisateur, des informations d'article à acheter pour un article et des informations de carte de crédit pour payer l'article ;
fournir, au terminal de véhicule (2000), le numéro de plaque d'immatriculation reçu et les informations d'article à acheter pour l'article ; et
transmettre le numéro de plaque d'immatriculation reçu, un coût total de l'article, des informations de dispositif concernant le dispositif mobile (1000) et les informations de carte de crédit au serveur de paiement (4000),
où le terminal de magasin (3000) est configuré pour :
recevoir le numéro de plaque d'immatriculation et les informations d'article à acheter du terminal de véhicule (2000), et
transmettre, au serveur de paiement (4000), une demande d'un résultat d'authentification de paiement comprenant le numéro de plaque d'immatriculation et un coût total de l'article sur la base des informations d'article à acheter ; et
où le serveur de paiement (4000) est configuré pour :
authentifier le paiement de l'article sur la base d'une comparaison des coûts totaux reçus du dispositif mobile (1000) et du terminal de magasin (3000), respectivement, le terminal de magasin (3000) ayant transmis le même numéro de plaque d'immatriculation que le numéro de plaque d'immatriculation reçu du dispositif mobile (1000).

2. Système selon la revendication 1, où les instructions comprennent en outre :
recevoir des informations d'article concernant une pluralité d'articles à partir d'un serveur de service d'un magasin hors ligne ;
commander à un écran d'afficher les informations d'article reçues ; et
recevoir l'entrée utilisateur pour sélectionner les informations d'article à acheter parmi les informations d'article affichées.

3. Système selon la revendication 1, où les instructions comprennent en outre :
recevoir des informations d'adresse d'un serveur de magasin qui sont diffusées à partir du terminal de magasin (3000) ; et
se connecter au serveur de magasin sur la base des informations d'adresse reçues.

4. Système selon la revendication 1, où les instructions comprennent en outre la commande à un écran d'afficher une liste de cartes de crédit enregistrées dans le dispositif mobile (1000).

5. Système selon la revendication 1, où les instructions comprennent en outre la recommandation d'une carte de crédit pour payer l'article parmi une pluralité de cartes de crédit enregistrées dans le dispositif mobile (1000).

6. Système selon la revendication 1, où les instructions comprennent en outre :
recevoir une entrée utilisateur comprenant des informations d'authentification pour authentifier l'utilisation de la carte de crédit sélectionnée ; et
authentifier l'utilisation de la carte de crédit sélectionnée sur la base des informations d'authentification,
où, en réponse à l'authentification de l'utilisation de la carte de crédit sélectionnée, transmettre le numéro de plaque d'immatriculation reçu et les informations concernant la carte de crédit sélectionnée au serveur de paiement (4000).

7. Système selon la revendication 1, où les instructions comprennent en outre l'activation d'une application de paiement pour payer l'article en réponse au terminal de véhicule (2000) étant connecté au dispositif mobile (1000) par l'intermédiaire d'une communication sans fil à courte portée.

8. Procédé de fourniture de données pour payer un article, effectué par un dispositif mobile (1000), un terminal de magasin (3000) et un serveur de paiement (4000), le procédé comprenant :
recevoir (S610), par le dispositif mobile (1000), un numéro de plaque d'immatriculation provenant d'un terminal de véhicule (2000) ;
obtenir, sur la base d'une entrée utilisateur, par le dispositif mobile (1000), des informations d'article à acheter pour l'article et des informations de carte de crédit pour payer l'article ;
fournir (S635), par le dispositif mobile (1000), au terminal de véhicule (2000) le numéro de plaque d'immatriculation reçu et les informations d'article à acheter pour l'article ;
transmettre (S645), par le dispositif mobile (1000), le numéro de plaque d'immatriculation, un coût total de l'article, des informations de dispositif concernant le dispositif mobile (1000) et les informations de carte de crédit au serveur de paiement (4000) ;
recevoir (S640), par le terminal de magasin (3000), le numéro de plaque d'immatriculation et les informations d'article à acheter du terminal de véhicule (2000) ;
transmettre (S650), par le terminal de magasin (3000), au serveur de paiement (4000), une demande d'un résultat d'authentification de paiement comprenant le numéro de plaque d'immatriculation et un coût total de l'article sur la base des informations d'article à acheter ; et
authentifier (S655), par le serveur de paiement (4000), le paiement de l'article sur la base d'une comparaison des coûts totaux reçus du dispositif mobile (1000) et du terminal de magasin (3000), respectivement, le terminal de magasin (3000) ayant transmis le même numéro de plaque d'immatriculation que le numéro de plaque d'immatriculation reçu du dispositif mobile (1000).

9. Procédé selon la revendication 8 comprenant en outre :
recevoir, par le dispositif mobile (1000), des informations d'article concernant une pluralité d'articles à partir d'un serveur de service d'un magasin hors ligne ;
afficher, par le dispositif mobile (1000), les informations d'article reçues ; et
recevoir, par le dispositif mobile (1000), l'entrée utilisateur pour sélectionner les informations d'article à acheter parmi les informations d'article affichées.

10. Procédé selon la revendication 8, où le terminal de magasin (3000) est physiquement situé dans un magasin et où le procédé comprend en outre la capture de la plaque d'immatriculation du terminal de véhicule (2000) positionné devant le terminal de magasin (3000) via une caméra.

11. Support d'enregistrement lisible par ordinateur sur lequel est enregistré un programme pour exécuter le procédé selon la revendication 8.
